(19) Europäisches Patentamt
European Patent Office
Office européen des brevets

(11) Publication number: 0 566 063 A1

(12) **EUROPEAN PATENT APPLICATION**

(21) Application number: 93105978.6

(51) Int. Cl.5: G03C 1/83

(22) Date of filing: 13.04.93

(30) Priority: 14.04.92 JP 119587/92

(43) Date of publication of application: 20.10.93 Bulletin 93/42

(84) Designated Contracting States: DE FR GB

(71) Applicant: FUJI PHOTO FILM CO., LTD.
210 Nakanuma
Minami-Ashigara-shi
Kanagawa(JP)

(72) Inventor: Jimbo, Yoshihiro, c/o Fuji Photo Film Co., Ltd.
210 Nakanuma,
Minami Ashigara-shi
Kanagawa(JP)
Inventor: Tamoto, Koji, c/o Fuji Photo Film Co., Ltd.
210 Nakanuma,
Minami Ashigara-shi
Kanagawa(JP)

(74) Representative: Patentanwälte Grünecker, Kinkeldey, Stockmair & Partner
Maximilianstrasse 58
D-80538 München (DE)

(54) **Silver halide photographic material.**

(57) A silver halide photographic material comprising a support and having thereon at least one silver halide photographic emulsion layer and containing at least one compound represented by the following formula (I):

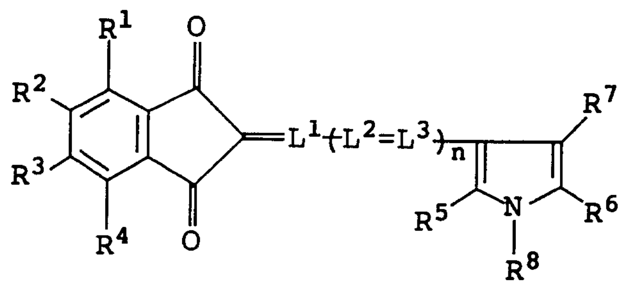

(I)

wherein $R^1$, $R^2$, $R^3$ and $R^4$, which may be the same or different, each represents a hydrogen atom, an alkyl group, an aryl group, $-OR^{10}$, $-COOR^{10}$, $-CONR^{10}R^{11}$, $-CONHCOR^{10}$, $-CONHSO_2R^{10}$, $-NR^{11}COR^{10}$, $-NR^{11}SO_2R^{10}$, $-NR^{10}R^{11}$ or a halogen atom; $R^5$, $R^6$ and $R^7$, which may be the same or different, each represents a hydrogen atom, an alkyl group or an aryl group; $R^8$ represents a hydrogen atom, an alkyl group, an aryl group or an amino group; $L^1$, $L^2$ and $L^3$ each represents a methine group; n represents 0, 1 or 2; $R^{10}$ and $R^{11}$, which may be the same or different, each represents a hydrogen atom, an alkyl group or an aryl group; or $R^1$ and $R^2$, $R^2$ and $R^3$, $R^3$ and $R^4$ or $R^6$ and $R^7$ may combine and form a ring.

EP 0 566 063 A1

## FIELD OF THE INVENTION

This invention relates to a silver halide photographic material having a dyed layer. More particularly, this invention relates to a silver halide photographic material having a hydrophilic colloid layer containing a dye which is photochemically inert and can be easily decolorized and/or dissolved out in photographic processing.

## BACKGROUND OF THE INVENTION

Often photographic emulsion layers or other hydrophilic colloid layers of silver halide photographic materials are colored to absorb light in a specific wavelength region.

Usually, a colored layer is provided farther from the support than photographic emulsion layers when the spectral composition of light which enters the photographic emulsion layers is to be controlled. Such a colored layer as described above is called a filter layer. When two or more photographic emulsion layers are used in a photographic material, a filter layer is often interposed therebetween.

A colored layer called an antihalation layer is often provided between a photographic emulsion layer and the support or on the opposite side of the support to the photographic emulsion layer to prevent blurring of the image, that is, to prevent halation from occurring when light which is scattered during or after the passage thereof through a photographic emulsion layer is reflected at the interface between the emulsion layer and the support or on the opposite surface of the photographic material to the emulsion layer side thereof and again enters the photographic material. When two or more photographic emulsion layers are used in a photographic material, an antihalation layer is often interposed therebetween.

Further, a photographic emulsion layer is often colored to prevent image sharpness from being reduced by the scattering of light in the photographic emulsion layer (this phenomenon is generally called irradiation).

These hydrophilic colloid layers to be colored usually contain dyes. It is necessary for the dyes to have the following characteristics.

(1) The dyes should have an appropriate spectral absorption depending on their use.

(2) The dyes should be photochemically inert. Specifically, the dyes must not adversely effect, in a chemical sense, the performance of the silver halide photographic emulsion layers. For example, a reduction in sensitivity, the fading of a latent image or fogging does not occur thereby.

(3) The dyes are decolorized during photographic processing or are dissolved out into the processing solutions or washing water so that no harmful coloration is not left behind on the photographic materials after processing.

(4) The dyes do not diffuse from the dyed layers into other layers.

(5) The dyes have excellent stability over a long period of time and discoloration does not occur when they are present in a processing solution or in the photographic materials.

Particularly, when the colored layer is a filter layer or when the colored layer is an antihalation layer provided on the photographic emulsion layer side of the support, it is necessary for these layers to be selectively colored and other layers are substantially not colored. The reason is when other layers are colored, the coloration has an adverse spectral effect on other layers and moreover, the effect as a filter layer or an antihalation layer is diminished. There is often the possibility that when a dye-containing layer and another hydrophilic colloid layer are brought into contact with each other in a wet state, a part of the dye diffuses from the former into the latter. Many attempts have been made to prevent the diffusion of the dye from occurring.

For example, U.S. Patents 2,548,564, 4,124,386 and 3,625,694 disclose a method wherein a hydrophilic polymer with an opposite charge to dissociated anionic dye coexists as a mordant in the same layer, and the dye is localized in a specific layer as a result of the interaction between the dye molecule and the polymer.

A method where a specific layer is dyed using a water-insoluble solid dye is disclosed in JP-A-56-12639 (the term "JP-A" as used herein means an "unexamined published Japanese patent application"), JP-A-55-155350, JP-A-55-155351, JP-A-63-27838, JP-A-63-197943, European Patents 15,601, 274,723, 276,566 and 299,435, U.S. Patent 4,803,150 and PCT WO 88/04794.

Further, a method where a specific layer is dyed using fine metal salt particles with dye adsorbed thereby is disclosed in U.S. Patents 2,719,088, 2,496,841 and 2,496,843 and JP-A-60-45237.

Furthermore, U.S. Patents 4,420,555, 4,861,700 and 4,923,788, JP-A-61-204630, JP-A-61-205934, JP-A-62-32630, JP-A-62-56958, JP-A-62-222248, JP-A-63-184749, JP-A-63-77054 and JP-A-3-144438 disclose a method where an oil-soluble dye is dissolved in a substantially water-insoluble high-boiling solvent and the

resulting solution is dispersed in a hydrophilic colloid layer; and a method wherein dispersion is achieved using a polymer latex.

However, when these improved methods are used, the decolorization rate and/or the dissolving-out rate of the dye during processing are/is slow. Accordingly, when changes in factors were made, for example, when rapid processing was conducted or the compositions of processing solutions or photographic emulsions were changed, the problem with regard to stain occurring due to the residual color of the dye was difficult to solve.

## SUMMARY OF THE INVENTION

Accordingly, an object of the present invention is to provide a photographic material containing a dye as a fine solid particle dispersion or an oil or polymer composition, the dye being capable of selectively dyeing only a specific layer and being capable of being rapidly decolorized and/or dissolved out during processing.

As a result of research, it has now been found that the above-described object of the present invention is achieved by a silver halide photographic material comprising a support having thereon at least one silver halide emulsion layer and containing at least one of the compounds represented by the following general formula (I):

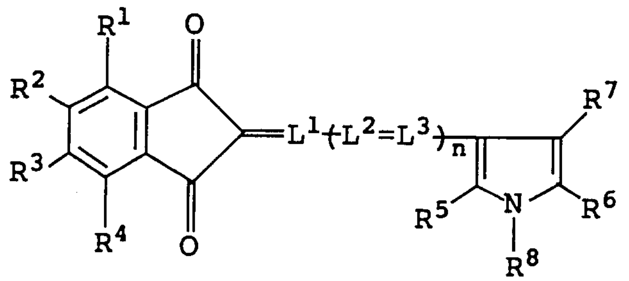

(I)

wherein $R^1$, $R^2$, $R^3$ and $R^4$, which may be the same or different, each represents a hydrogen atom, an alkyl group, an aryl group, $-OR^{10}$, $-COOR^{10}$, $-CONR^{10}R^{11}$, $-CONHCOR^{10}$, $-CONHSO_2R^{10}$, $-NR^{11}COR^{10}$, $-NR^{11}SO_2R^{10}$, $-NR^{10}R^{11}$ or a halogen atom; $R^5$, $R^6$ and $R^7$, which may be the same or different, each represents a hydrogen atom, an alkyl group or an aryl group; $R^8$ represents a hydrogen atom, an alkyl group, an aryl group, or an amino group; $L^1$, $L^2$ and $L^3$ each represents a methine group; n represents 0, 1 or 2; $R^{10}$ and $R^{11}$, which may be the same or different, each represents a hydrogen atom, an alkyl group or an aryl group; or $R^1$ and $R^2$, $R^2$ and $R^3$, $R^3$ and $R^4$ or $R^6$ and $R^7$ may combine and form a ring.

## DETAILED DESCRIPTION OF THE INVENTION

The present invention is illustrated in greater detail below.

It is preferred for the dyes of the present invention to have a dissociable group such as preferably a sulfonamido group, a sulfamoyl group, a carboxyl group (in the free form), a carbonimido group, a sulfonimido group, an acylsulfamoyl group or a sulfonylcarbamoyl group. When the dyes of the present invention are used in the form of a fine solid particle dispersion, it is preferred that the dyes do not have a sulfo group, a sulfonic acid salt group and a carboxylic acid salt group as substituent groups.

When the dyes of the present invention are used in the form of an oil composition and/or a polymer composition, it is preferred that the dyes do not have a sulfo group, a sulfonic acid salt group and a carboxylic acid salt group and the dyes have high solubility in organic solvents having a boiling point of about 30 to about 150°C, such as lower alkyl acetates (e.g., ethyl acetate, butyl acetate), ethyl propionate, sec-butyl alcohol, methyl isobutyl ketone, β-ethoxyethyl acetate and methyl Cellosolve acetate and readily water-soluble solvents such as methanol and ethanol.

The compound of general formula (I) which is used in the present invention is illustrated in detail below.

The alkyl group represented by $R^1$, $R^2$, $R^3$ and $R^4$ is preferably an alkyl group having 1 to 6 carbon atoms, particularly preferably 1 or 2 carbon atoms such as methyl and ethyl.

The aryl group represented by $R^1$, $R^2$, $R^3$ and $R^4$ is preferably an aryl group having 6 to 12 carbon atoms such as phenyl and tolyl. The aryl group can also be a heteroaromatic group such as furyl and tetrahydrofurfuryl.

The alkyl group represented by $R^5$, $R^6$ and $R^7$ is preferably an alkyl group having 1 to 6 carbon atoms such as ethyl and propyl with methyl being particularly preferred.

The aryl group represented by $R^5$, $R^6$ and $R^7$ is preferably an aryl group having 6 to 13 carbon atoms with a phenyl group being particularly preferred.

The six-membered ring formed by $R^6$ and $R^7$ may be any of a saturated ring, an unsaturated ring and a heterocyclic ring. However, a benzene ring is particularly preferred.

The alkyl group represented by $R^8$ is preferably an alkyl group having 1 to 18 carbon atoms. Examples of suitable alkyl groups include methyl, ethyl ethoxycarbonylmethyl, t-butoxycarbonylmethyl, ethoxycarbonylethyl, dimethylaminomethyl, 2-cyanoethyl, 3-acetamidopropyl, 3-propionylaminopropyl, 3-benzenesulfonamidopropyl, 3-propanesulfonamidopropyl and tetrahydrofurfuryloxycarbonylethyl.

The aryl group represented by $R^8$ is preferably an aryl group having 6 to 22 carbon atoms. Examples of typical aryl groups include phenyl, 2-methoxy-5-ethoxycarbonylphenyl, 4-di(ethoxycarbonylmethyl)-aminocarbonylphenyl, 4-n-octyloxycarbonylphenyl, 4-hydroxyethoxycarbonylphenyl, 4-propanesulfonamidophenyl, 4-butanesulfonamidocarbonylphenyl, 4-methanesulfonamidocarbonylphenyl, 4-acetylsulfamoylphenyl and 4-methanesulfonamidophenyl.

The amino group represented by $R^8$ is preferably a dialkylamino group (e.g., dimethylamino, diethylamino).

The alkyl group represented by $R^{10}$ and $R^{11}$ is preferably an alkyl group having 1 to 12 carbon atoms. Examples of suitable alkyl groups include methyl, ethyl, octyl, dodecyl, cyclohexyl, ethoxycarbonylmethyl, ethoxycarbonylethyl, 2-hydroxyethyl, 2-ethoxyethyl, 2-methanesulfonamidoethyl, cyanoethyl, 2,2,3,3-tetrafluoropropyl, chloroethyl, bromoethyl, acetoxyethyl and dimethylaminoethyl.

The aryl group represented by $R^{10}$ and $R^{11}$ is preferably an aryl group having 6 to 12 carbon atoms. Examples of appropriate aryl groups include phenyl, 4-methoxyphenyl and 3-methylphenyl.

The ring formed by $R^1$ and $R^2$, $R^2$ and $R^3$ or $R^3$ and $R^4$ may be any of a saturated ring, an unsaturated ring and a heterocyclic ring. However, a benzene ring is particularly preferred.

The methine group represented by $L^1$, $L^2$ and $L^3$ may be any of a substituted methine group (examples of substituent groups include methyl, ethyl, benzyl and cyano) and an unsubstituted methine group. However, an unsubstituted methine group is preferred.

Examples of compounds of the formula (I) which can be used in the present invention include, but are not limited to, the following compounds.

D－1

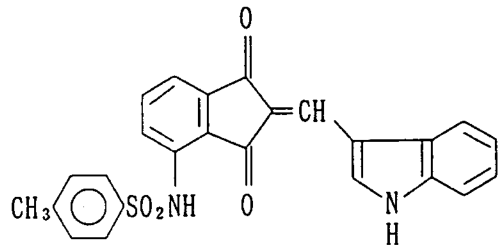

D－2

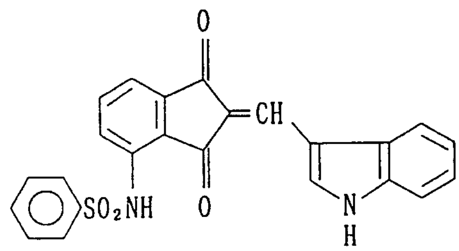

D－3

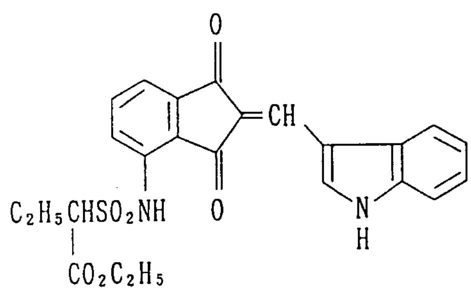

D－4

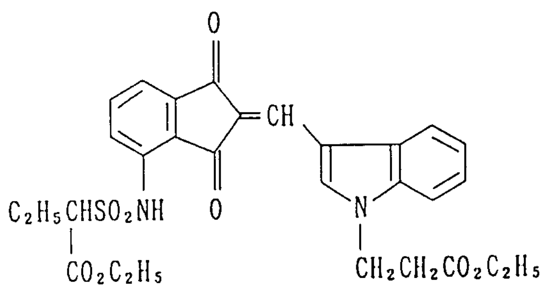

D－5

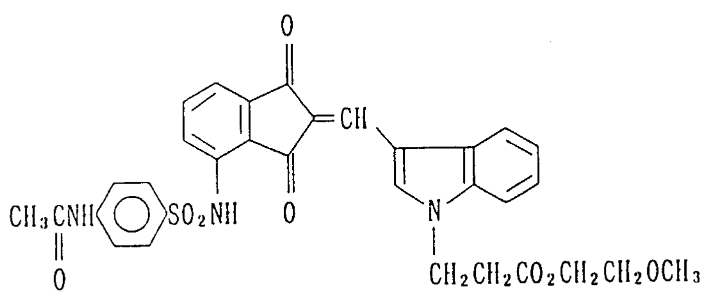

D－6

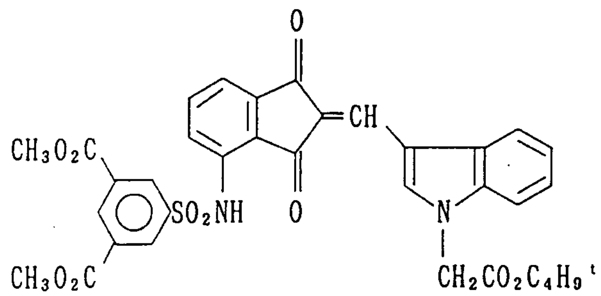

D－7

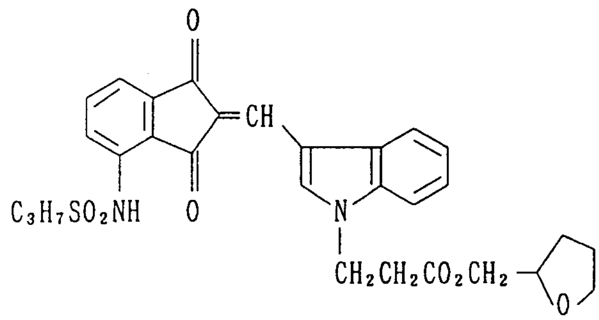

D－8

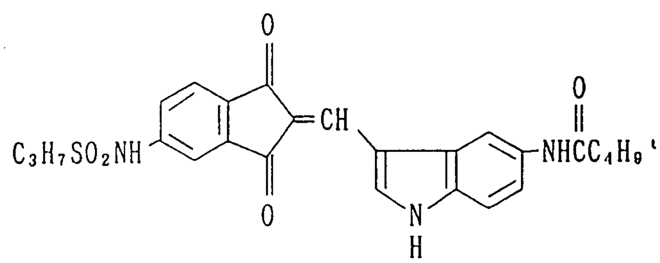

D－9

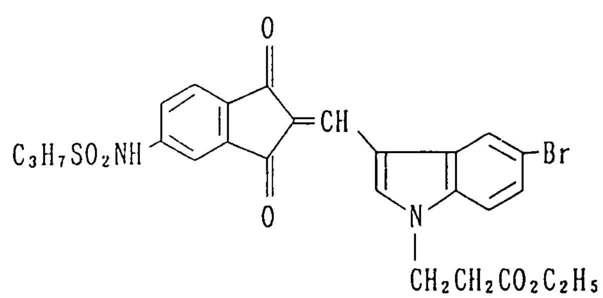

D－10

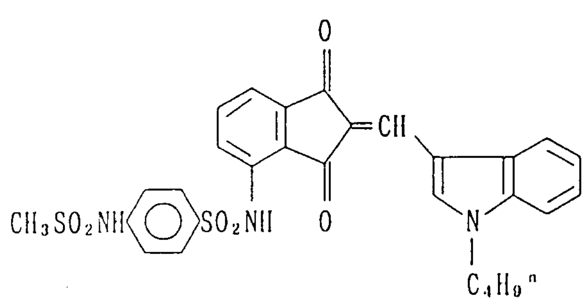

D－１１

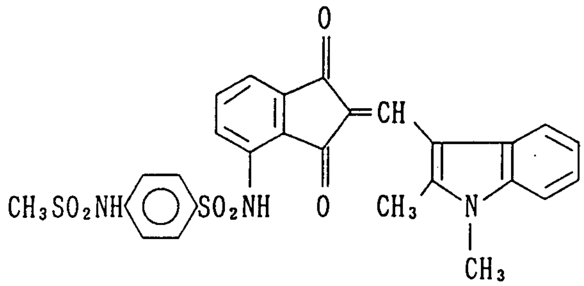

D－１２

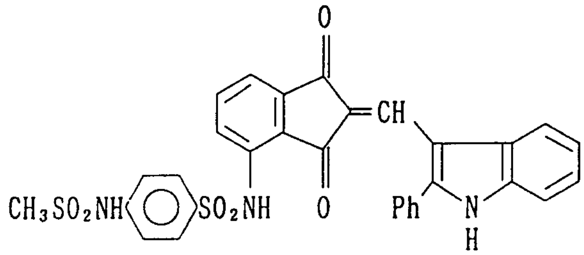

D－１３

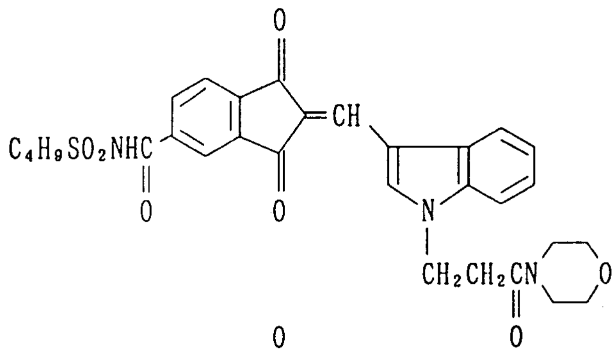

D－１４

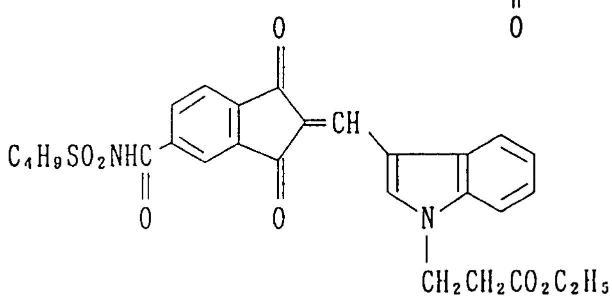

D－１５

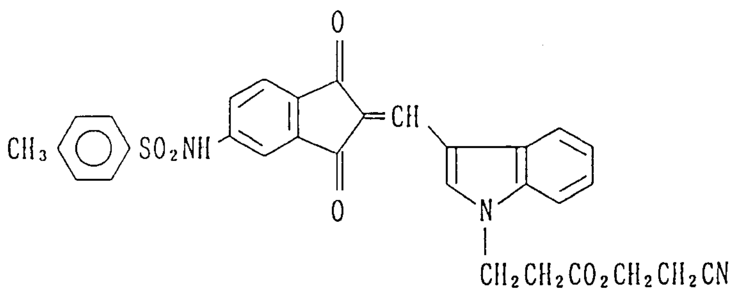

D－１６

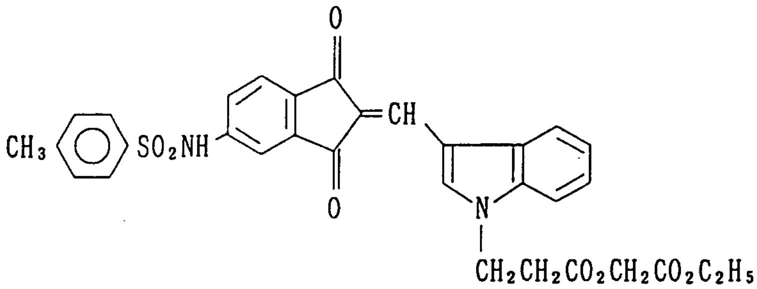

D－１７

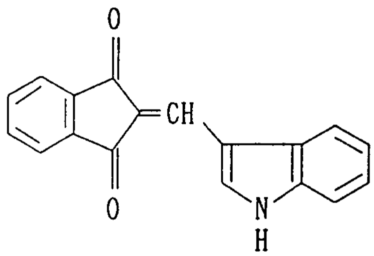

D－１８

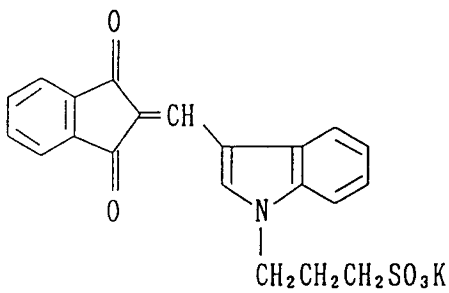

D－１９

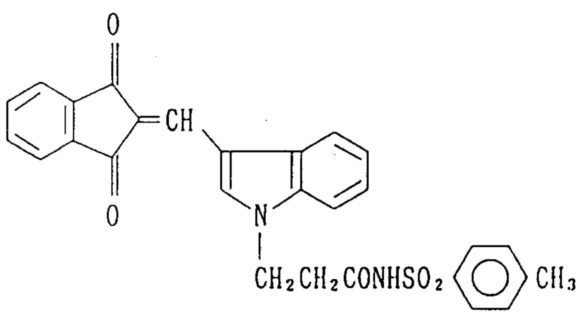

D－２０

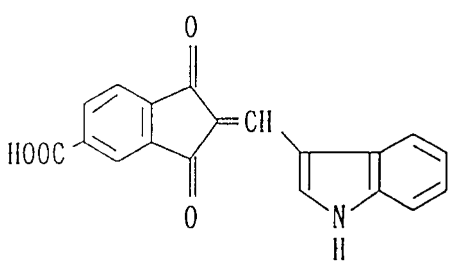

D－２１

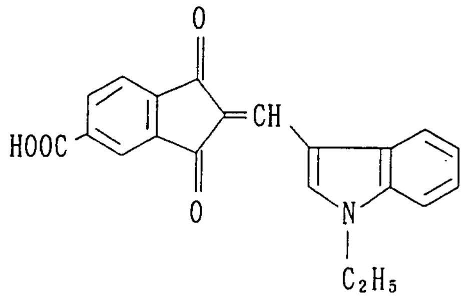

D－２２

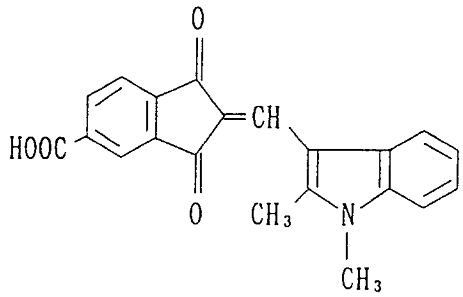

D－２３

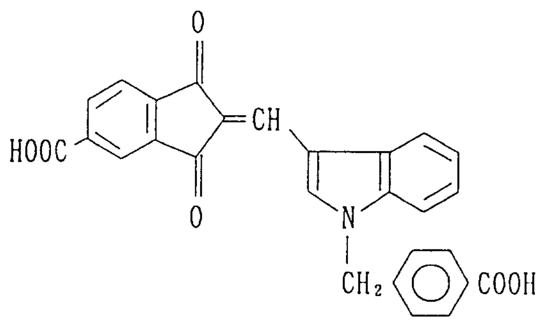

D－２４

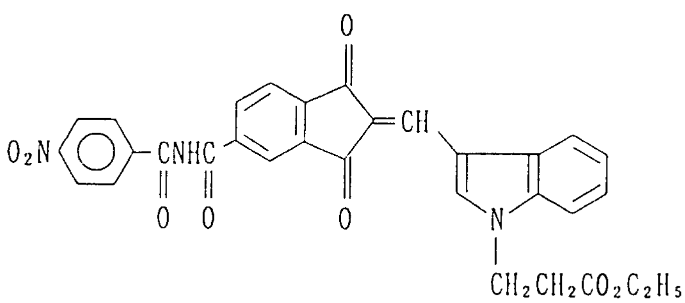

D－２５

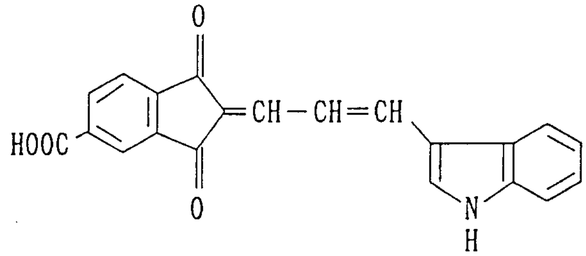

D－２６

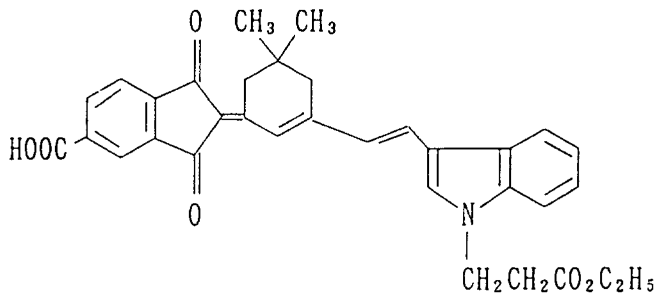

D－２７

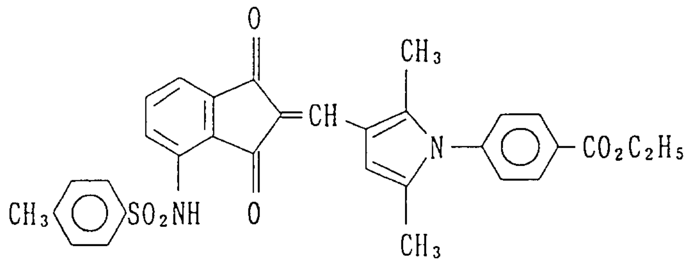

D－２８

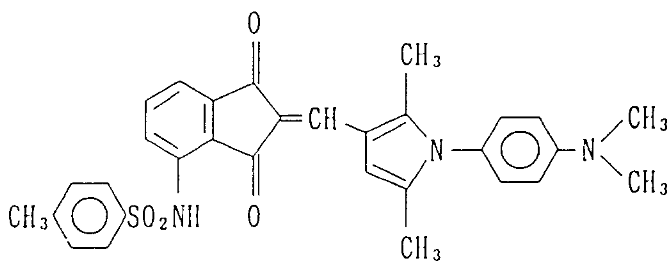

D－２９

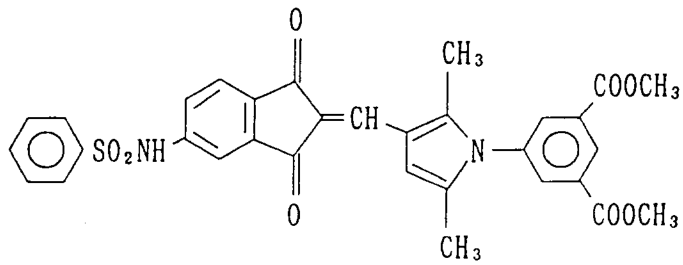

D－３０

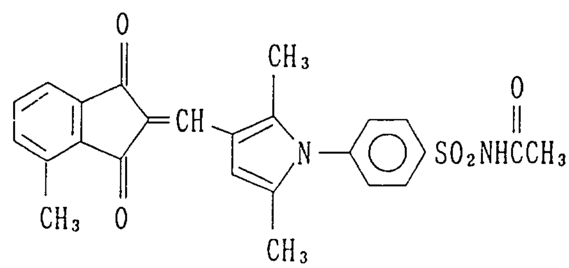

D－３１

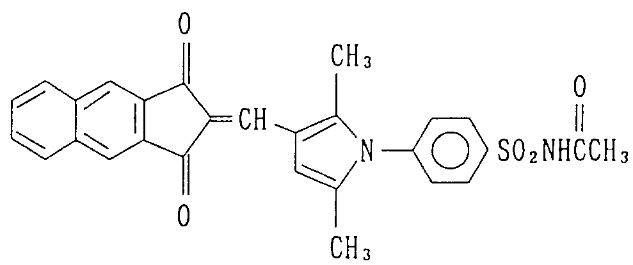

D－３２

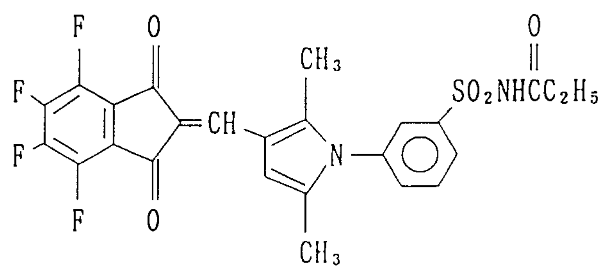

D－３３

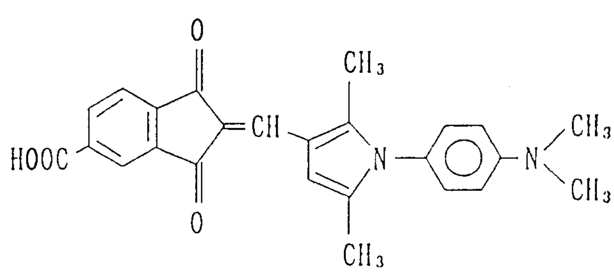

D－３４

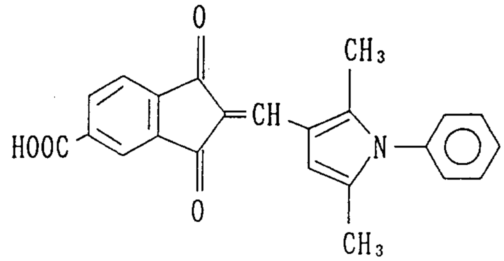

D－３５

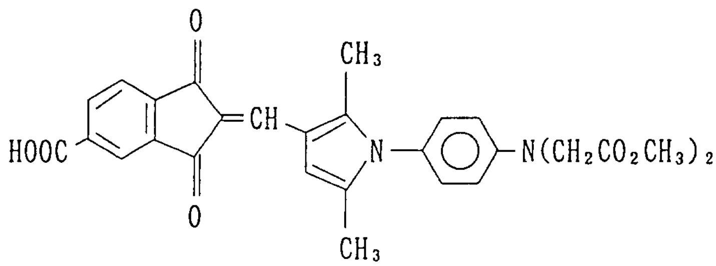

D－３６

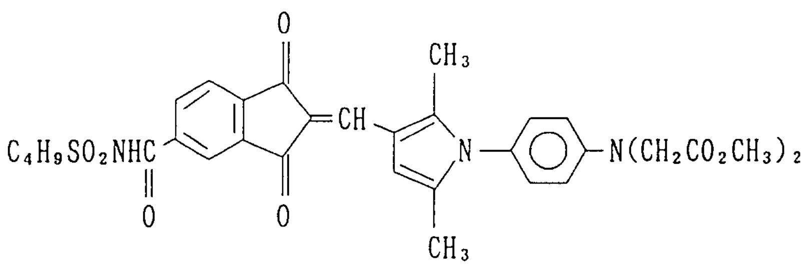

D－３７

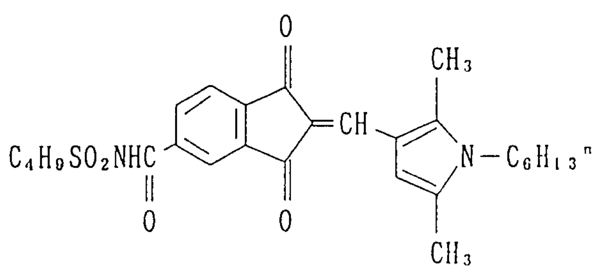

D－３８

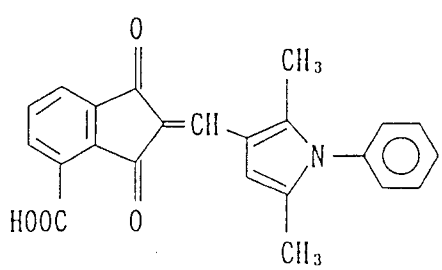

D-39

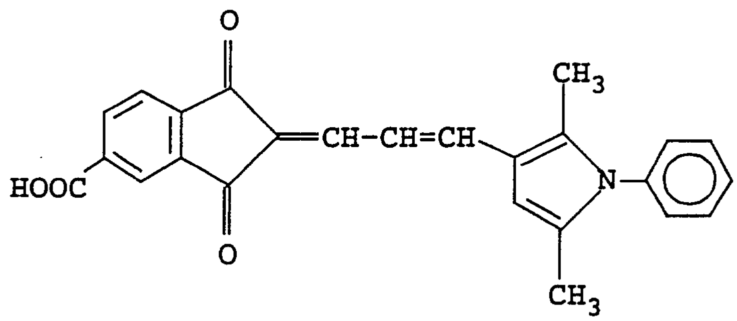

D-40

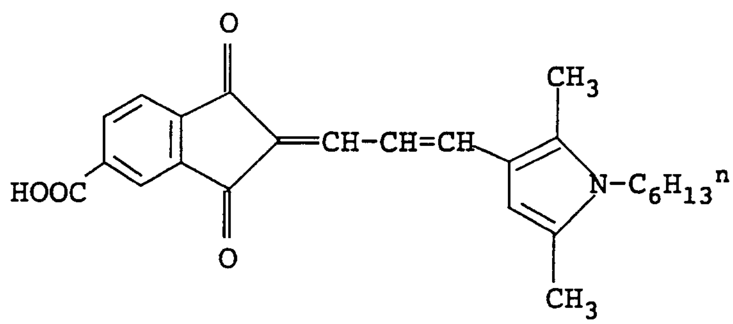

The compounds of general formula (I) can be synthesized using the methods described in Zh. Org. Khim. 1973, 9, 185, Latv PSR Zinat. Akad. Vestis. Khim. Ser. 1972, 333 (Chemical Abstracts, Vol. 77, 88123r, 1972), ibid., 1972, 77 (Chemical Abstracts, Vol. 76, 153553b, 1972), etc.

A typical example of the synthesis thereof is illustrated below. Unless otherwise indicated herein, all parts, percents, ratios and the like are by weight.

SYNTHESIS EXAMPLE

Synthesis of D-1

(1) Synthesis of 2-(3-Indolylmethylidene)-4-nitro-1,3-indanedione (D-41)

D-41

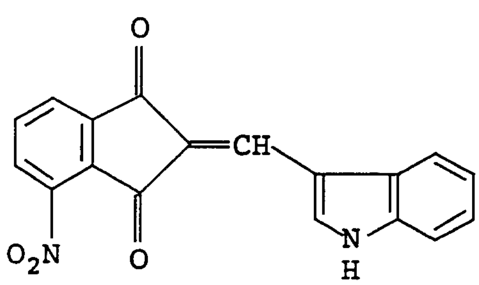

A mixture of 5.3 g of 2-ethoxycarbonyl-4-nitro-1,3-indanedione and 2.9 g of indole-3-carboaldehyde in 20 ml of acetic acid was heated at 80 °C for 30 minutes. The resulting mixture was cooled to room temperature (about 20 to 30 °C). The precipitated product was separated by filtration, washed with methanol and dried to obtain 6.1 g of D-41. $\lambda_{max}$ 456 nm (AcDEt)

(2) Synthesis of 2-(3-Indolylmethylidene)-4-amino-1,3-indanedione (D-42)

D-42

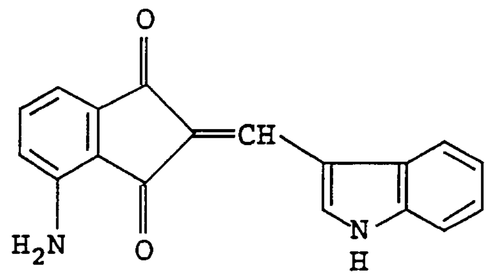

A mixture of 5.6 g of iron powder, 0.3 g of ammonium chloride, 4 ml of water and 20 ml of isopropanol was heated at reflux. To the mixture, there were added 6.1 g of D-41, 20 ml of ethanol and 4 ml of water, and the resulting mixture was heated at reflux for 2 hours. To the reaction mixture (solution), there was added 120 ml of dimethylformamide (DMF). Insoluble matter was removed by filtration, and the filtrate was concentrated under reduced pressure to obtain 4.0 g of D-42. $\lambda_{max}$ 434 nm (AcDEt)

(3) Synthesis of D-1

To a mixture of 3.1 g of D-42, 1.4 g of triethylamine and 20 ml of N,N-dimethylacetamide, there was added 2.7 g of p-toluenesulfonyl chloride. The resulting mixture was stirred at room temperature for 30 minutes. To this reaction mixture, there was added 60 ml of 0.5 N hydrochloric acid. The mixture was extracted with 60 ml of ethyl acetate. The extract was washed with 60 ml of saturated sodium chloride, dried over magnesium sulfate and concentrated. The residue was purified by means of column chromatography to obtain 2.4 g of D-1. $\lambda_{max}$ 390 nm (AcDEt)

The compounds of general formula (I) can be used in an amount of 1 to 1000 mg, preferably 1 to 800 mg, per $m^2$ of the light-sensitive material.

When the compounds of general formula (I) are used as filter dyes or antihalation dyes, the compounds may be used in such an amount that the effect can be obtained, but it is preferred for the compounds to be used in an amount to give an optical density of 0.05 to 3.5. The compounds may be added at any stage before coating.

The compounds of general formula (I) according to the present invention may be present in any of the emulsion layers and other hydrophilic colloid layers.

The fine solid particle dispersion of the compounds of general formula (I) according to the present invention can be formed using a method wherein the compounds of the present invention are precipitated in the form of a dispersion and/or a conventional crushing method which is carried out in the presence of a dispersant, for example, a method using ball milling (e.g., using a ball mill, an oscillating ball mill, a planetary ball mill, etc.), sand milling, colloid milling, jet milling or roller milling (in this case, solvents (e.g., water, alcohol, etc. may be used)). In another embodiment, the compounds of the present invention are dissolved in an appropriate solvent, and a poor solvent for the compounds of the present invention may be added thereto to precipitate a crystalline powder. In this case, dispersing surfactants may be used. In still another embodiment, the compounds of the present invention are dissolved by controlling pH, and the pH is changed to form a crystalline powder. The crystalline particles of the compounds of the present invention in the dispersion have an average particle size of preferably 10 $\mu$m or less, but 0.01 $\mu$m or larger, more preferably 2 $\mu$m or less, particularly preferably 0.5 $\mu$m or less. In some cases, fine particles having an average particle size of 0.1 $\mu$m or less are still more preferred.

The dispersion of the oil compositions of the dyes of the present invention and/or the polymer compositions of the dyes of the present invention can be achieved in the following manner.

(1) A method wherein the compounds are dissolved in an oil, i.e., a substantially water-insoluble high-boiling solvent having a boiling point of about 160 °C or higher, and the resulting solution is dispersed in a hydrophilic colloid solution. Examples of suitable high-boiling solvents which can be used include alkyl phthalates (e.g., dibutyl phthalate, dioctyl phthalate), phosphoric esters (e.g., diphenyl phosphate, triphenyl phosphate, tricresyl phosphate, dioctyl phosphate), citric esters (e.g., tributyl acetylcitrate),

benzoic esters (e.g., octyl benzoate), alkylamides (e.g., diethyllaurylamide), fatty acid esters (e.g., dibutoxyethyl succinate, diethyl azelate) and trimesic acid esters (e.g., tributyl ester of trimesic acid) as described in U.S. Patent 2,322,027. Further, organic solvents having a boiling point of about 30 to about 150°C such as lower alkyl acetates (e.g., ethyl acetate, butyl acetate), ethyl propionate, sec-butyl alcohol, methyl isobutyl ketone, β-ethoxyethyl acetate, methyl cellosolve acetate and readily water-soluble solvents such as alcohols (e.g., methanol, ethanol) can be used.

The dye and the high-boiling solvent are used in a ratio of preferably 10:1 to 1:10 by weight.

(2) A method wherein a polymer, i.e., a water-insoluble, organic solvent-soluble polymer is used in place of or in combination with the high-boiling solvent described in (1) above.

This method is described in Japanese Patent Application Nos. 3-232436, and 3-232471 (corresponding to JP-A-5-45794 and JP-A-5-45789, respectively) and Japanese Patent Application No. 3-344120.

(3) A method wherein the dye of the present invention and other additives are present as a filled polymer latex composition in photographic emulsion layers and other hydrophilic colloid layers.

Examples of suitable polymer latexes include polyurethane polymers and polymers obtained by polymerizing vinyl monomers (examples of suitable vinyl monomers include acrylic esters (e.g., methyl acrylate, ethyl acrylate, butyl acrylate, hexyl acrylate, octyl acrylate, dodecyl acrylate, glycidyl acrylate), α-substituted acrylic esters (e.g., methyl methacrylate, butyl methacrylate, octyl methacrylate, glycidyl methacrylate), acrylamides (e.g., butyl acrylamide, hexyl acrylamide), α-substituted acrylamides (e.g., butyl methacrylamide, dibutyl methacrylamide), vinyl esters (e.g., vinyl acetate, vinyl butyrate), vinyl halides (e.g., vinyl chloride), vinylidene halides (e.g., vinylidene chloride), vinyl ethers (e.g., vinyl methyl ether, vinyl octyl ether), styrene, α-substituted styrenes (e.g., α-methylstyrene), nucleus-substituted styrenes (e.g., hydroxystyrene, chlorostyrene, methylstyrene), ethylene, propylene, butylene, butadiene and acrylonitrile. These compounds may be used either alone or as a combination of two or more of them. Other vinyl monomers may be used as a minor component. Examples of other vinyl monomers include itaconic acid, acrylic acid, methacrylic acid, hydroxyalkyl acrylates, hydroxyalkyl methacrylates, sulfoalkyl acrylates, sulfoalkyl methacrylates and styrenesulfonic acid).

The filled polymer latex can be prepared by reference to the methods described in JP-B-51-39853 (the term "JP-B" as used herein means an "examined Japanese patent publication"), JP-A-51-59943, JP-A-53-137131, JP-A-54-32552, JP-A-54-107941, JP-A-55-133465, JP-A-56-19043, JP-A-56-19047, JP-A-56-126830 and JP-A-58-149038.

The dye and the polymer latex are used in a ratio of preferably 10:1 to 1:10 by weight.

(4) A method wherein a hydrophilic polymer is used in place of or in combination with the high-boiling solvent described in (1) above. This method is described in U.S. Patent 3,619,195 and West German Patent 1,957,467.

(5) A method wherein the compounds are dissolved using a surfactant.

Examples of useful surfactants include oligomers and polymers.

Suitable polymers are described in JP-A-60-158437 (pages 19 to 27). The surfactants described in JP-A-53-138726 are particularly preferred.

A hydrosol of hydrophilic polymers as described in JP-B-51-39835 may be added to the hydrophilic colloid dispersion obtained above.

A typical example of a hydrophilic colloid is gelatin. However, any hydrophilic colloid conventionally used for photographic materials can be used.

Silver halides used in the emulsions of the present invention are preferably silver bromide, silver iodobromide, silver iodochlorobromide, silver chlorobromide and silver chloride.

The silver halide grains of the present invention may have a regular crystal form such as a cube or octahedron form, an irregular crystal form such as a spherical form or a platy form, or a composite form of these crystal forms. A mixture of grains with various crystal forms can also be used. However, grains having a regular crystal form are preferred.

The interior of the silver halide grain of the present invention and the surface layer thereof may be different from each other, or may comprise a uniform phase. These may be grains wherein a latent image is predominantly formed on the surface of the grain (e.g., negative emulsion) or grains wherein a latent image is predominantly formed in the interior of the grain (e.g., internal latent image type emulsion, previously fogged direct reversal type emulsion). However, grains wherein a latent image is predominantly formed on the surface of the grain are preferred.

Silver halide emulsions preferably used in the present invention include emulsions comprising silver halide grains having a grain size distribution such that grains having a thickness of 0.5 µm or smaller, preferably 0.3 µm or smaller, a grain size of 0.6 µm or larger and an aspect ratio (the diameter of the grain

in terms of the diameter of a circle/the thickness of the grain) of 5 or greater account for at least 50% of the projected area of all of the grains, and monodisperse emulsions comprising grains having a coefficient of variation (a value S/d obtained by dividing the standard deviation S by the diameter d of the mean grain size distribution when the diameter of the grain is represented by the diameter of a circle having an area corresponding to the projected area of the grain) of 20% or less from the standpoint of statistics. A mixture of two or more tabular grain emulsions and monodisperse emulsions may be used, if desired.

Photographic emulsions which can be used in the present invention can be prepared using the methods described in P. Glafkides, Chimie et Physique Photographique (Paul Montel 1967), G. F. Duffin, Photographic Emulsion Chemistry (Focal Press 1966) and V. L. Zelikman, Making and Coating Photographic Emulsion (Focal Press 1964).

Solvents for silver halide, such as ammonia, potassium rhodanide, ammonium thiocyanate, thioether compounds (e.g., those described in U.S. Patents 3,271,157, 3,574,628, 3,704,130, 4,297,439 and 4,276,374), thione compounds (e.g., those described in JP-A-53-144319, JP-A-53-82408 and JP-A-55-77737) and amine compounds (e.g., those described in JP-A-54-100717) can be used to control the growth of the silver halide grains during the formation of the grains.

Cadmium salts, zinc salts, thallium salts, iridium salts or complex salts thereof, rhodium salts or complex salts thereof, iron salts or complex salts thereof may be copresent during the formation of the silver halide grains or the physical ripening of the grains.

Gelatin can be advantageously used as a binder or protective colloid in the emulsion layers and interlayers of the light-sensitive materials of the present invention. In addition, other hydrophilic colloids can be used. Examples of other hydrophilic colloid which can be used in the present invention include gelatin derivatives, graft polymers of gelatin with other high-molecular weight materials, albumin and casein; cellulose derivatives such as hydroxyethyl cellulose, carboxymethyl cellulose and cellulose sulfate; sugar derivatives such as sodium alginate and starch derivatives; and synthetic hydrophilic high-molecular weight materials such as homopolymers, for example, polyvinyl alcohol, polyvinyl alcohol partial acetal, poly-N-vinyl pyrrolidone, polyacrylic acid, polymethacrylic acid, polyacrylamide, polyvinyl imidazole and polyvinyl pyrazole and copolymers thereof.

Examples of suitable gelatins include general-purpose lime-processed gelatin, acid-processed gelatin and enzyme-processed gelatin described in Bull. Soc. Sci. Phot. Japan, No. 16, page 30 (1966). Hydrolyzates of gelatin can also be used, if desired.

The photographic sensitive layers and other hydrophilic layers (including back layer) of the light-sensitive materials of the present invention may contain inorganic or organic hardening agents. Examples of suitable hardening agents include chromium salts, aldehydes (e.g., formaldehyde, glyoxal, glutaraldehyde) and N-methylol compounds (e.g., dimethylol urea). Active halogen compounds (e.g., 2,4-dichloro-6-hydroxy-1,3,5-triazine and sodium salt thereof) and active vinyl compounds (e.g., 1,3-bisvinylsulfonyl-2-propanol, 1,2-bis(vinylsulfonylacetamido)ethane, bis(vinylsulfonylmethyl)ether or vinyl polymers having a vinylsulfonyl group as a side chain) are preferred because hydrophilic colloids such as gelatin can be quickly hardened and stable photographic characteristics can be achieved. N-carbamoylpyridium salts (e.g., (1-morpholinocarbonyl-3-pyridinio)methanesulfonate) and haloamidinium salts (e.g., 1-(1-chloro-1-pyridinomethylene)pyrrolidinium 2-naphthalenesulfonate) have a high hardening rate and are superior.

The silver halide photographic emulsions of the present invention may be spectrally sensitized with methine dyes and other dyes. Examples of suitable dyes which can be used include cyanine dyes, merocyanine dyes, complex cyanine dyes, complex merocyanine dyes, holopolar cyanine dyes, hemicyanine dyes, styryl dyes and hemioxonol dyes. Particularly useful dyes are cyanine dyes, merocyanine dyes and complex merocyanine dyes. Any of nuclei, as basic heterocyclic nuclei, conventionally used for cyanine dyes can be employed in these dyes. Examples of applicable nuclei include a pyrroline nucleus, an oxazoline nucleus, a thiazoline nucleus, a pyrrole nucleus, an oxazole nucleus, a thiazole nucleus, a selenazole nucleus, an imidazole nucleus, a tetrazole nucleus, a pyridine nucleus; nuclei formed by fusing alicyclic hydrocarbon rings with the above nuclei; and nuclei formed by fusing aromatic hydrocarbon rings with the above nuclei such as an indolenine nucleus, a benzindolenine nucleus, an indole nucleus, a benzoxazole nucleus, a naphthoxazole nucleus, a benzthiazole nucleus, a naphthothiazole nucleus, a benzoselenazole nucleus, a benzimidazole nucleus and a quinoline nucleus. These nuclei may have one or more substituent groups attached to the carbon atoms thereof.

Nuclei having a keto-methylene structure such as five-membered to six-membered heterocyclic nuclei, for example, a pyrazoline-5-one nucleus, a thiohydantoin nucleus, a 2-thiooxazolidine-2,4-dione nucleus, a thiazolidine-2,4-dione nucleus, a rhodanine nucleus and a thiobarbituric acid nucleus can be employed in merocyanine dyes or complex merocyanine dyes.

These sensitizing dyes may be used either alone or in combination. Particularly, a combination of sensitizing dyes can be used for the purpose of supersensitization. In addition to sensitizing dyes, the emulsions may contain a dye which itself does not have a spectral sensitization effect, or a substance which does substantially not absorb visible light and has a supersensitization effect. Examples of substances which may be present in the emulsions include nitrogen-containing heterocyclic nucleus-containing group-substituted aminostilbene compounds (e.g., those described in U.S. Patents 2,933,390 and 3,635,721), aromatic organic acid/formaldehyde condensates (e.g., those described in U.S. Patent 3,743,510), cadmium salts and azaindene compounds. The combinations described in U.S. Patents 3,615,613, 3,615,641, 3,617,295 and 3,635,721 are particularly useful.

The silver halide photographic emulsions of the present invention may contain various compounds to prevent fogging from occurring during the course of the preparation, storage or photographic processing of the light-sensitive materials of the present invention or to stabilize photographic performance. Examples of such compounds, known as anti-fogging agents or stabilizers, include azoles such as benzthiazolium salts, nitroindazoles, nitrobenzimidazoles, chlorobenzimidazoles, bromobenzimidazoles, mercaptothiazoles, mercaptobenzthiazoles, mercaptobenzimidazoles, mercaptothiadiazoles, aminotriazoles, benztriazoles, nitrobenztriazoles and mercaptotetrazoles (particularly, 1-phenyl-5-mercaptotetrazole); mercaptopyrimidines; mercaptotriazines, thioketo compounds such as oxazolinethione; azaindenes such as triazaindenes, tetrazaindenes (particularly, 4-hydroxy-substituted (1,3,3a,7)-tetrazaindenes), pentazaindenes; and benzenethiosulfinic acid, benzenesulfinic acid and benzenesulfonic acid amide.

The light-sensitive materials of the present invention may contain at least one surfactant as a coating aid or to impart antistatic properties, improve slipperiness, improve emulsifying dispersion, prevent adhesion or improve photographic characteristics (e.g., development acceleration, high contrast, or sensitization).

The hydrophilic colloid layers of the light-sensitive materials of the present invention may contain water-soluble dyes as filter dyes or to prevent irradiation or a halation, in addition to the dyes of the formula (I). Examples of such dyes which can be preferably used include oxonol dyes, hemioxonol dyes, styryl dyes, merocyanine dyes, anthraquinone dyes and azo dyes. In addition thereto, cyanine dues, azomethine dyes, triarylmethine dyes and phthalocyanine dyes are useful. Oil-soluble dyes can be added to the hydrophilic colloid layers by emulsifying them by means of oil-in-water dispersion method.

The photographic emulsion layers and other layers of the photographic materials of the present invention are coated on a flexible support such as a synthetic resin film, paper or cloth or a rigid support such as glass, ceramic or metal conventionally used for photographic materials. Examples of useful flexible supports include films of semi-synthetic or synthetic high-molecular weight materials such as cellulose nitrate, cellulose acetate, cellulose acetate butyrate, polystyrene, polyvinyl chloride, polyethylene terephthalate and polycarbonate and paper coated or laminated with a baryta layer or an $\alpha$-olefin polymer (e.g., polyethylene, polypropylene, ethylene/butene copolymer). The support may be colored with a dye or a pigment. The support may be black to screen light. Generally, the surfaces of these supports are subjected to an undercoat treatment to thereby improve adhesion to the photographic emulsion layers, etc. The surfaces of the supports may be subjected to a glow discharge treatment, a corona discharge treatment, ultraviolet irradiation or a flame treatment before or after the undercoat treatment.

The coating of the photographic emulsion layer and other hydrophilic colloid layers can be carried out using conventional coating methods such as dip coating method, roller coating method, curtain coating method and extrusion coating method. If desired, two or more layers may be simultaneously coated using the multilayer coating methods described in U.S. Patents 2,681,294, 2,761,791, 3,526,528 and 3,508,947.

The present invention can be applied to X-ray black-and-white light-sensitive materials by utilizing tri-color coupler mixing described in Research Disclosure No. 17123 (July 1978), or black color forming couplers described in U.S. Patent 4,126,461 and U.K. Patent 2,102,136. Furthermore, the present invention can be applied to films for plate making such as lith films and scanner films; X-ray films for direct or indirect medical use and industrial X-ray films; negative black-and-white films for photographing; black-and-white photographic papers; microfilms for COM or general purpose use; silver salt diffusion transfer light-sensitive materials; and print-out type light-sensitive materials.

When the photographic elements of the present invention are applied to color diffusion transfer photography, the photographic elements may be in the form of a peel apart type film unit, an integrated type film unit described in JP-B-46-16356, JP-B-48-33697, JP-A-50-13040 and U.K. Patent 1,330,524 or a non-peel-off type film unit described in JP-A-57-119345.

In any of the formats described above, it is advantageous from the viewpoint of widening the allowable margin of the processing temperature that a polymer acid layer protected by a neutralizing timing layer is used. When the compounds of the present invention are used in color diffusion transfer photography, the compounds may be present in any layer of the photographic material or may be present as a component of

a developing solution in the processing solution container.

Various exposure means can be used with the light-sensitive materials of the present invention. A light source which emits radiation having a wavelength corresponding to the sensitivity of the light-sensitive material can be used as a lighting source or a writing light source. Generally, natural light (sunlight), an incandescent lamp, a halogen lamp, a mercury vapor lamp, a fluorescent lamp and flash light sources such as a strobe and metal combination flash bulb are used. Light sources which emit light in the wavelength region of ultraviolet light to infrared light, such as gas, dye solution or semiconductor lasers, light emitting diodes and plasma light sources can be used as light sources for exposure. Further, exposure means comprising a linear or planar light source in combination with micro-shutter array which utilizes lanthanum-doped lead titanium zirconate (PLZT), liquid crystal (LCD) or fluorescent screen (CRT) which emits light by a phosphor exited with electron beam, etc. can be used. If desired, the spectral distribution of the light of exposure may be optionally adjusted with a color filter.

Color developing solutions which can be used in the development of the light-sensitive materials of the present invention are preferably aqueous alkaline solutions mainly composed of aromatic primary amine color developing agents. Aminophenol compounds are useful as the color developing agents and p-phenylenediamine compounds are preferred as color developing agents. Typical examples thereof include 3-methyl-4-amino-N,N-diethylaniline, 3-methyl-4-amino-N-ethyl-N-$\beta$-hydroxyethylaniline, 3-methyl-4-amino-N-ethyl-N-$\beta$-methanesulfonamidoethylaniline, 3-methyl-4-amino-N-ethyl-N-$\beta$-methoxyethylaniline and salts thereof such as sulfate, hydrochloride and p-toluenesulfonate. Generally, these diamines are stable in the form of a salt rather than in the free form, and they are preferably used in the form of a salt.

Generally, the color developing solutions contain pH buffering agents such as alkali metal carbonates, borates and phosphates, restrainers such as bromides, iodides, benzimidazoles, benzothiazoles and mercapto compounds and anti-fogging agents. If desired, the color developing solutions may optionally contain preservatives such as hydroxylamines, dialkylhydroxylamines, hydrazines such as N,N-biscarboxymethylhydrazine, triethanolamine, triethylenediamine, phenylsemicarbazides, catecholsulfonic acids and sulfites; organic solvents such as triethanol amine and diethylene glycol; development accelerators such as benzyl alcohol, polyethylene glycol, quaternary ammonium salts and amines; color forming couplers, competitive couplers, nucleating agents such as sodium boron hydride; auxiliary developing agents such as 1-phenyl-3-pyrazolidone; tackifiers; and chelating agents such as aminopolycarboxylic acids, aminopolyphosphonic acids, alkylphosphonic acids and phosphocarboxylic acids, for example, ethylenediaminetetraacetic acid, nitrilotriacetic acid, diethylenetriaminepentaacetic acid, cyclohexanediaminetetraacetic acid, hydroxyethylimidinoacetic acid, 1-hydroxyethylidene-1,1-diphoshonic acid, nitrilo-N,N,N-trimethylenephosphonic acid, ethylenediamine-N,N,N',N'-tetramethylenephosphonic acid and ethylenediamine-di(o-hydroxyphenylacetic acid) and salts thereof, and antioxidants described in West German Patent Application (OLS) No. 2,622,950.

Not only the color developing solutions, but also any photographic development method can be applied to the light-sensitive materials of the present invention. Developing agents which can be used in the developing solutions include dihydroxybenzene developing agents, 1-phenyl-3-pyrazolidone developing agents and p-aminophenol developing agents. These compounds may be used either alone or in combination. For example, a combination of 1-phenyl-3-pyrazolidones with dihydroxybenzenes or a combination of p-aminophenol with dihydroxybenzenes can be used. The light-sensitive materials of the present invention may be processed with infectious developing solutions containing a sulfite ion buffer such as carbonyl bisulfite and hydroquinone.

Examples of suitable dihydroxybenzene developing agents include hydroquinone, chlorohydroquinone, bromohydroquinone, isopropylhydroquinone, toluhydrohydroquinone, methylhydroquinone, 2,3-dichlorohydroquinone and 2,5-dimethylhydroquinone. Examples of 1-phenyl-3-pyrazolidone developing agents include 1-phenyl-3-pyrazolidone, 4,4-dimethyl-1-phenyl-3-pyrazolidone, 4-hydroxymethyl-4-methyl-1-phenyl-3-pyrazolidone, and 4,4-dihydroxymethyl-1-phenyl-3-pyrazolidone. Examples of p-aminophenol developing agents include p-aminophenol and N-methyl-p-aminophenol.

A compound providing free sulfite ion such as sodium sulfite, potassium sulfite, potassium metabisulfite or sodium bisulfite as a preservative is added to the developing solutions. In the case of the use of infectious developing solutions, formaldehyde sodium bisulfite adduct which scarcely produces free sulfite ion in the developing solutions may be used.

Examples of alkaline agents which can be used in the developing solutions of the present invention include sodium hydroxide, potassium carbonate, sodium carbonate, sodium acetate, potassium tertiary phosphate, diethanolamine and triethanolamine. The pH of the developing solutions is usually 9 or higher, preferably 9.7 or higher.

The developing solutions may contain organic compounds known as anti-fogging agents or restrainers. Examples of these organic compounds include azoles such as benzthiazolium salts, nitroindazoles, nitrobenzimidazoles, chlorobenzimidazoles, bromobenzimidazoles, mercaptothiazoles, mercaptobenzthiazoles, mercaptobenzimidazole, mercaptothiadiazoles, aminotriazoles, benztriazoles, nitrobenztriazoles and mercaptotetrazoles (particularly, 1-phenyl-5-mercaptotetrazole); mercaptopyrimidines; mercaptotriazines; thioketo compounds such as oxazolinethione; azaindenes such as triazaindenes, tetrazaindenes (particularly, 4-hydroxy-substituted (1,3,3a,7)tetrazaindenes) and pentazaindenes; and benzenethiosulfonic acid, benzenesulfinic acid, benzenesulfonic acid amide and sodium 2-mercaptobenzimidazole-5-sulfonate.

The developing solutions for use in the present invention may contain polyalkylene oxides as restrainers. For example, polyethylene oxide having a molecular weight of 1,000 to 10,000 in an amount of 0.1 to 10 g/ℓ may be present in the developing solutions.

It is preferred for the developing solutions for use in the present invention to contain water softeners such as nitrilotriacetic acid, ethylenediaminetetraacetic acid, triethylenetetraminehexaacetic acid and diethylenetetraminepentaacetic acid.

The developing solutions for use in the present invention may contain compounds described in JP-A-56-24347 as silver stain inhibitors, compounds described in JP-A-62-212651 as development blur inhibitors, and compounds described in Japanese Patent Application No. 60-109743 (corresponding to JP-A-61-267759) as dissolution aids.

The developing solutions for use in the present invention may contain boric acid described in JP-A-62-186259, saccharide (e.g., saccharose), oximes (e.g., acetoxime), phenols (e.g., 5-sulfosalicylic acid) or tertiary phosphates (e.g., sodium salt, potassium salt), as buffering agents described in JP-A-93433.

Development accelerators may be used in the present invention. The development accelerators may be added to the light-sensitive materials or any processing solution. Preferred examples of development accelerators include amine compounds, imidazole compounds, imidazoline compounds, phosphonium compounds, sulfonium compounds, hydrazine compounds, thioether compounds, thione compounds, certain mercapto compounds, meso-ionic compounds and thiocyanates.

The use of development accelerators is desirable particularly when short-time rapid processing is to be carried out. It is desirable for these development accelerators to be present in the color developing solutions. However, these development accelerators may be present in the light-sensitive materials depending on the types of accelerators or the position of the light-sensitive layer to be development-accelerated on the support. The development accelerators may be present in both the color developing solution and the light-sensitive material. Further, the prebath of the color development bath may be optionally provided, and the development accelerators may be present in the prebath.

Useful amine compounds include both inorganic amines such as hydroxylamine and organic amines. Examples of organic amines include aliphatic amines, aromatic amines, cyclic amines, aliphatic-aromatic mixed amines and heterocyclic amines. Primary, secondary and tertiary amines and quaternary ammonium compounds are effective.

After color development, the photographic emulsion layers are usually bleached. Bleaching and fixing may be carried out simultaneously or separately. After bleaching, bleaching-fixing processing may be carried out to expedite processing.

Bleaching solutions, bleaching-fixing solutions and the prebath thereof may optionally contain bleaching accelerators.

After the bleaching-fixing processing or fixing processing, washing and stabilization treatments are usually carried out. Conventional compounds may be present in the washing stage and the stabilization stage to prevent precipitation from occurring or to save water. Examples of compounds which may be used to prevent precipitation from occurring include water softeners such as inorganic phosphoric acid, aminopolycarboxylic acids, organic aminopolyphosphonic acids and organic phosphoric acids; germicides and antifungal agents which prevent bacteria, algae and mold from growing; metal salts such as typically magnesium salts, aluminum salts and bismuth salts; surfactants for reducing the drying load or prevention of blurring from occurring; or hardening agents. The compounds described in L. E. West, Phot. Sci. Eng., Vol. 6, pages 344 to 359 (1965) may be added. The use of chelating agents and antifungal agents is particularly effective.

Generally, the washing stage is carried out using a countercurrent system with two or more tanks to save water. A multi-stage countercurrent stabilization stage described in JP-A-57-8543 may be carried out in place of the washing stage. This stage involves generally 2 to 9 countercurrent baths. Various compounds in addition to the above-described additives are present in the stabilization baths to stabilize images. Typical examples of compounds which can be present include buffering agents for adjusting the pH of the layers (e.g., pH of 3 to 9) (e.g., borates, metaborates, borax, phosphates, carbonates, potassium

hydroxide, sodium hydroxide, ammonia water, monocarboxylic acids, dicarboxylic acids and polycarboxylic acids are used alone or in combination); formaldehyde and other aldehydes. If desired, additives such as chelating agents (e.g., inorganic phosphoric acids, aminopolycarboxylic acids, organic phosphoric acids, organic phosphonic acids, aminopolyphosphonic acids, phosphonocarboxylic acids), germicides (e.g., benzisothiazolinone, isothiazolone, 4-thiazolinebenzimidazole, halogenated phenol, sulfanilamide, benztriazole), surfactants, brightening agents and hardening agents may be optionally used. Two or more compounds may be used in combination to achieve the same object or different objects.

It is preferred for the ammonium salts such as ammonium chloride, ammonium nitrate, ammonium sulfate, ammonium phosphate, ammonium sulfite and ammonium thiosulfate to be used as a pH adjustor for the layers after processing.

In the case of light-sensitive materials for photographing, the washing-stabilization stage is conventionally carried out after fixing and it may be replaced with the above-described stabilization stage and washing stage (water saving treatment). In this case, formaldehyde in the stabilization bath may be eliminated when the magenta coupler is a two equivalent type coupler.

The washing and stabilization processing time of the present invention varies depending on the types of the light-sensitive materials and processing conditions, but is usually 20 seconds to 10 minutes, preferably 20 seconds to 5 minutes.

The silver halide color light-sensitive materials of the present invention may contain color developing agents to simplify and expedite processing. It is preferred for precursors of color developing agents to be used and to incorporate them in the light-sensitive materials. Examples of precursors include the indoaniline compounds described in U.S. Patent 3,342,597, the Schiff base type compounds described in U.S. Patent 3,342,599, Research Disclosure No. 14850 and ibid., 15159, the aldol compounds described in Research Disclosure No. 13924, the metal salt complexes described in U.S. Patent 3,719,492, the urethane compounds described in JP-A-53-135628 and the salt type precursors described in JP-A-56-6235, JP-A-56-16133, JP-A-56-59232, JP-A-56-67842, JP-A-56-83734, JP-A-56-83735, JP-A-56-83736, JP-A-56-89735, JP-A-56-81837, JP-A-56-54430, JP-A-56-106241, JP-A-56-107236, JP-A-57-97531 and JP-A-57-83565.

The silver halide color light-sensitive materials of the present invention may optionally contain 1-phenyl-3-pyrazolidones to accelerate color development. Typical examples of 1-phenyl-3-pyrazolidone compounds are described in JP-A-56-64339, JP-A-57-144547, JP-A-57-211147, JP-A-58-50532, JP-A-58-50536, JP-A-58-50533, JP-A-58-50534, JP-A-58-50535 and JP-A-58-115438.

If desired, treatments using cobalt intensification or hydrogen peroxide intensification as described in West German Patent 2,226,770 and U.S. Patent 3,674,499 may be carried out to conserve silver.

If desired, a heater, a temperature sensor, a liquid level sensor, a circulating pump, a filter, a floating cover and a squeezer may be optionally provided in the processing baths.

When continuous processing is carried out, a given degree of finish can be achieved by preventing the fluctuation of the composition of each processing solution by using replenisher for the processing solution. The replenishment rate can be reduced to half or less of the standard replenishment rate to reduce costs.

When the light-sensitive material of the present invention is a color paper, bleaching-fixing is generally carried out. When the light-sensitive material of the present invention is a color photographic material for photographing, bleaching-fixing may be optionally carried out.

When the light-sensitive materials of the present invention are used as color photographic materials for photographing, preferred requirements include the following factors, but are not limited to the color photographic materials for photographing.

The light-sensitive material of the present invention may comprise a support having thereon at least one silver halide emulsion layer of a blue-sensitive layer, a green-sensitive layer and a red-sensitive layer. There is no particular limitation with regard to the number of silver halide emulsion layers and light-insensitive layers and the order of the layers present. In a typical embodiment, a silver halide photographic material comprises a support having thereon at least one light-sensitive layer comprising a plurality of silver halide emulsion layers having substantially the same color sensitivity, but different light sensitivity, the light-sensitive layer being a unit light-sensitive layer with color sensitivity to any one of blue light, green light and red light. In a multi-layer color photographic material, the arrangement of the unit light-sensitive layers is generally in order of a red-sensitive layer, a green-sensitive layer and a blue-sensitive layer from the support. However, the arrangement may be made in the reverse order to that described above depending on the purpose. Further, between light-sensitive layers having the same color sensitivity, there may be interposed a light-sensitive layer with different light sensitivity from that of the above layers.

Light-insensitive layers such as interlayers may be positioned between the silver halide light-sensitive layers or as the uppermost layer or the lowermost layer.

The interlayers may contain couplers, DIR compounds, etc. described in JP-A-61-43748, JP-A-59-113438, JP-A-59-113440, JP-A-61-20037 and JP-A-61-20038 and conventional color mixing inhibitors.

It is preferred for each unit light-sensitive layer comprising a plurality of silver halide emulsion layers to have a two layer structure composed of a high-sensitivity emulsion layer and a low-sensitivity emulsion layer as described in West German Patent 1,121,470 and U.K. Patent 923,045. Usually, these layers are arranged so that light sensitivity is reduced toward the support. A light-insensitive layer may be positioned between the silver halide emulsion layers. If desired, the low-sensitivity emulsion layer may be positioned on a side which is farther from the support, and the high-sensitivity emulsion layer may be positioned nearer the support as described in JP-A-57-112751, JP-A-62-200350, JP-A-62-206541 and JP-A-62-206543.

Specifically, the arrangement can be made in the order of low-sensitivity blue-sensitive layer (BL)/high-sensitivity blue-sensitive layer (BH)/high-sensitivity green-sensitive layer (GH)/low-sensitivity green-sensitive layer (GL)/high-sensitivity red-sensitive layer (RH)/low-sensitivity red-sensitive layer (RL), in the order of BH/BL/GL/GH/RH/RL, or in the order of BR/BL/GH/GL/RL/RH from the side which is farthest from the support.

The arrangement may be made in the order of blue-sensitive layer/GH/RH/GL/RL from the side which is farthest from the support as described in JP-B-55-34932. The arrangement may be made in the order of blue-sensitive layer/GL/RL/GH/RH from the side which is farthest from the support as described in JP-A-56-25738 and JP-A-62-63936.

In another embodiment, the unit light-sensitive layer may comprise a three layer structure composed of three layers having a different light sensitivity so arranged that the light sensitivity is reduced toward the support in such a manner that the uppermost layer is a silver halide emulsion layer having the highest light sensitivity, the intermediate layer is a silver halide emulsion layer having a lower light sensitivity than that of the uppermost layer, and the lowermost layer is a silver halide emulsion layer having a lower light sensitivity than that of the intermediate layer as described in JP-B-49-15495. In such a three layer structure composed of three layers with different light sensitivity as described above, the arrangement of the layers with the same color sensitivity may be made in the order of intermediate-sensitivity emulsion layer/high-sensitivity emulsion layer/low-sensitivity emulsion layer from the side which is farther from the support as described in JP-A-59-202464. In another embodiment, the arrangement may be made in the order of high-sensitivity emulsion layer/low-sensitivity emulsion layer/intermediate-sensitivity layer or in the order of low-sensitivity emulsion layer/intermediate-sensitivity emulsion layer/high-sensitivity emulsion layer. Further, a four or more layer structure may be used, and various arrangements can be made as described above.

It is preferred for a donor layer (CL) having an interlayer effect and a different spectral sensitivity distribution from the main light-sensitive layer such as BL, GL or RL as described in U.S. Patents 4,663,271, 4,705,744 and 4,707,436, JP-A-62-160448 and JP-A-63-89850 to be adjacent the main light-sensitive layer or in the vicinity thereof to improve color reproducibility.

Various layer structures and arrangements can be appropriately made according to the purpose of each light-sensitive material as described above.

Usually, silver halide emulsions which have been physically ripened, chemically ripened and spectrally ripened are used. Additives used in these stages are described in Research Disclosure No. 17643, ibid. No. 18716 and ibid. No. 307105, and related places are indicated in the following table.

A mixture of two or more light-sensitive silver halide emulsions having different characteristics in at least one of grain size, grain size distribution, halogen composition, grain form and sensitivity may be used in the same layer in the light-sensitive materials of the present invention.

It is preferred for light-insensitive fine silver halide grains to be used in the present invention. The term "light-insensitive fine silver halide grains" as used herein refers to fine silver halide grains which are not sensitive to light during imagewise exposure to obtain a dye image and are substantially not developed in the development stage. It is preferred that fine grains are previously not fogged.

Fine silver halide grains have a silver bromide content of 0 to 100 mol%, may optionally contain silver chloride and/or silver iodide and have preferably a silver iodide content of 0.5 to 10 mol%.

Fine silver halide grains have a mean grain size (the diameter of the grain is defined as the diameter of a circle having an area equal to the projected area of the grain, and the average of the diameters of the grains is referred to as the mean grain size) of preferably 0.01 to 0.5 $\mu$m, more preferably 0.02 to 0.2 $\mu$m.

Fine silver halide grains can be prepared in the same manner as in the preparation of light-sensitive silver halide grains. The surfaces of the silver halide grains do not need to be chemically sensitized and spectrally sensitized. However, it is preferred that conventional stabilizers such as triazole, azaindene, benzthiazolium or mercapto compounds or zinc compounds are previously added thereto before the grains are added to coating solutions.

Colloidal silver can be present in the fine silver halide grain-containing layers.

The coating weight of the light-sensitive material of the present invention is preferably 6.0 g/m$^2$ or less, most preferably 4.5 g/m$^2$ or less in terms of silver.

Conventional photographic additives which can be used in the present invention are described in the three Research Disclosure (RD) described above, and the specific references therein are listed below.

| | Additives | RD17643 | RD18716 | RD307105 |
|---|---|---|---|---|
| 1 | Chemical Sensitizing Agents | page 23 | right column of page 648 | page 866 |
| 2 | Sensitivity Enhancer | | right column of page 648 | |
| 3 | Spectral Sensitizing Agents, Supersensitizing Agents | pages 23 to 24 | right column of page 648 to right column of page 649 | pages 866 to 868 |
| 4 | Brightening Agents | page 24 | right column of page 647 | page 868 |
| 5 | Anti-Fogging Agents, Stabilizers | pages 24 to 25 | right column of page 49 | pages 868 to 870 |
| 6 | Light Absorbers, Filter Dyes, Ultraviolet Light Absorbers | pages 25 to 26 | right column of page 649 to left column of page 650 | page 873 |
| 7 | Stain Inhibitors | right column of page 25 | left column to right column of page 650 | page 872 |
| 8 | Dye Image Stabilizers | page 25 | left column of page 650 | page 872 |
| 9 | Hardening Agents | page 26 | left column of page 651 | pages 874 to 875 |
| 10 | Binders | page 26 | left column of page 651 | pages 873 to 874 |
| 11 | Plasticizers, Lubricants | page 27 | right column of page 650 | page 876 |
| 12 | Coating Aids, Surfactants | pages 26 to 27 | right column of page 650 | pages 875 to 876 |
| 13 | Antistatic Agents | page 27 | right column of page 650 | pages 876 to 877 |
| 14 | Matting Agents | | | pages 878 to 879 |

It is preferred for a compound capable of reacting with formaldehyde to fix it as described in U.S. Patents 4,411,987 and 4,435,503 to be present in the light-sensitive materials to prevent photographic performance from being deteriorated by formaldehyde gas.

It is also preferred for the light-sensitive materials of the present invention to contain mercapto compounds described in U.S. Patents 4,740,454 and 4,788,132, JP-A-62-18539 and JP-A-1-283551.

It is preferred for a compound capable of releasing a fogging agent, a development accelerator, a silver halide solvent or the precursor thereof without corresponding to an amount of a developed silver formed upon development described in JP-A-1-106052 to be present in the light-sensitive materials of the present invention.

The light-sensitive materials of the present invention may contain dyes dispersed using the method described in WO 88/04794 and JP-W-1-502912 (the term "JP-W" as used herein means an "unexamined published international patent application") or the dyes described in EP 317308A, U.S. Patent 4,420,555 and JP-A-1-259358.

Various color couplers can be used in the present invention. Examples thereof are described in patent specifications cited in the Research Disclosure No. 17643, VII-C to G and ibid. No. 307105, VII-C to G.

Examples of yellow couplers which can be advantageously used in the present invention include those described in U.S. Patents 3,933,501, 4,022,620, 4,326,024, 4,401,752 and 4,248,961, JP-B-58-10739, U.K. Patents 1,425,020 and 1,476,760, U.S. Patents 3,973,968, 4,314,023 and 4,511,649 and European Patent 249473A.

Preferred magenta couplers include 5-pyrazolone compounds and pyrazoloazole compounds. Examples of magenta couplers which can be particularly advantageously used in the present invention include those described in U.S. Patents 4,310,619 and 4,351,897, European Patent 73636, U.S. Patents 3,061,432 and 3,725,067, Research Disclosure No. 24220 (July 1984), JP-A-60-33552, Research Disclosure No. 24230 (Jane 1984), JP-A-60-43659, JP-A-61-72238, JP-A-60-35730, JP-A-55-118034, JP-A-60-185951, U.S. Patents 4,500,630, 4,540,654 and 4,556,630 and WO 88/04795.

Cyan couplers which can be used in the present invention include phenol couplers and naphthol couplers. Examples of the cyan couplers which can be advantageously used in the present invention include those described in U.S. Patents 4,052,212, 4,146,396, 4,228,233, 4,296,200, 2,369,929, 2,801,171 2,772,162, 2,895,826, 3,772,002, 3,758,308, 4,334,011 and 4,327,173, West German Patent Application (OLS) No. 3,329,729, European Patents 121365A and 249453A, U.S. Patents 3,446,622, 4,333,999, 4,775,616, 4,451,559, 4,427,767, 4,690,889, 4,254,212 and 4,296,199 and JP-A-61-42658. Further, pyrazoloazole couplers described in JP-A-64-553, JP-A-64-554, JP-A-64-555 and JP-A-64-556 and imidazole couplers described in U.S. Patent 4,818,672 can be used.

Typical examples of dye forming polymer couplers are described in U.S. Patents 3,451,820, 4,080,211, 4,367,282, 4,409,320 and 4,576,910, U.K. Patent 2,102,137 and European Patent 341188A.

Preferred examples of couplers whose developed dyes are properly diffusible include those described in U.S. Patent 4,366,237, U.K. Patent 2,125,570, European Patent 96570 and West German Patent Application (OLS) No. 3,234,533.

Preferred examples of colored couplers for correcting unwanted absorption of the developed dyes include those described in Research Disclosure No. 17643, Item VII-G, Research Disclosure No. 307105, Item VII-G, U.S. Patent 4,163,670, JP-B-57-39413, U.S. Patents 4,004,929 and 4,138,258 and U.K. Patent 1,146,368. Further, couplers for correcting unwanted absorption of developed dyes by fluorescent dye released during coupling as described in U.S. Patent 4,774,181 and couplers having, as an eliminable group, a dye precursor group capable of reacting with developing agents to form a dye as described in U.S. Patent 4,777,120 can be advantageously used.

Compounds which release a photographically useful residue on coupling can be advantageously used in the present invention. Preferred examples of DIR couplers which release a restrainer include those described in patent specifications cited in Research Disclosure (RD) 17643, Item VII-F and RD 307105, Item VII-F, JP-A-57-151944, JP-A-57-154234, JP-A-60-184248, JP-A-63-37346, JP-A-63-37350, U.S. Patents 4,248,962 and 4,782,012.

Couplers which release a bleaching accelerator described in RD No. 11449, RD No. 24241 and JP-A-61-201247 are effective in shortening the processing time in the processing stage having an ability of bleaching (i.e., bleaching step, bleach-fixing step), and the effect thereof is particularly marked when present in the light-sensitive materials containing the above described tabular silver halide grains. Preferred examples of couplers which imagewise release a nucleating agent or a development accelerator during development include those described in U.K. Patents 2,097,140 and 2,131,188, JP-A-59-157638 and JP-A-59-170840. Further, compounds which release a fogging agent, a development accelerator, a solvent for silver halide, etc. by redox reaction with the oxidation product of developing agents as described in JP-A-60-107029, JP-A-60-252340, JP-A-1-44940 and JP-A-1-45687 can be advantageously used.

Examples of compounds which can be used, in addition to the above-described compounds, in the light-sensitive materials of the present invention include competitive couplers described in U.S. Patent 4,130,427; polyequivalent type couplers described in U.S. Patents 4,283,472, 4,338,393 and 4,310,618; DIR redox compound-releasing couplers, DIR coupler-releasing couplers, DIR coupler-releasing redox compounds and DIR redox-releasing redox compounds described in JP-A-60-185950 and JP-A-62-24252; couplers which release a dye whose color is restored to the original color after elimination as described in European Patents 173302A and 313308A; ligand-releasing couplers described in U.S. Patent 4,555,477; couplers which release a leuco dye described in JP-A-63-75747; and couplers which release a fluorescent dye described in U.S. Patent 4,774,181.

The couplers used in the present invention can be incorporated into the light-sensitive materials by various conventional dispersion methods.

Examples of high-boiling solvents which can be used in oil-in-water dispersion methods are described in U.S. Patent 2,322,027. Examples of high-boiling organic solvents which have a boiling point of 175 °C or higher under atmospheric pressure and can be used in the oil-in-water dispersion methods include phthalic esters (e.g., dibutyl phthalate, dicyclohexyl phthalate, di-2-ethylhexyl phthalate, decyl phthalate, bis(2,4-di-t-amylphenyl)phthalate, bis(2,4-di-t-amylphenyl)isophthalate, bis(1,1-diethylpropyl)phthalate), phosphoric or phosphonic esters (e.g., triphenyl phosphate, tricresyl phosphate, 2-ethylhexyl diphenyl phosphate, tricyclohexyl phosphate, tri-2-ethylhexyl phosphate, tridodecyl phosphate, tributoxyethyl phosphate, trichloropropyl phosphate, di-2-ethylhexyl phenyl phosphate), benzoic esters (e.g., 2-ethylhexyl benzoate, dodecyl benzoate, 2-ethylhexyl p-hydroxybenzoate), amides (e.g., N,N-diethyldodecaneamide, N,N-diethyllaurylamide, N-tetradecylpyrrolidone), alcohols or phenols (e.g., isostearyl alcohol, 2,4-di-tert-amylphenol), aliphatic carboxylic acid esters (e.g., bis(2-ethylhexyl)sebacate, dioctyl azelate, glycerol tributyrate, isostearyl lactate, trioctyl citrate), aniline derivatives (e.g., N,N-dibutyl2-butoxy-5-tert-octylaniline) and hydrocarbons (e.g., paraffin, dodecylbenzene, diisopropylnaphthalene). Organic solvents having a boiling point of about 30 °C or higher, preferably 50 °C or higher, but 160 °C or lower can be used as auxiliary solvents. Examples of the auxiliary solvents include ethyl acetate, butyl acetate, ethyl propionate, methyl ethyl ketone, cyclohexanone, 2-ethoxyethyl acetate and dimethylformamide.

The stages and effects of latex dispersion methods and examples of impregnating latex are described in U.S. Patent 4,199,363 and West German Patent Application (OLS) Nos. 2,541,274 and 2,541,230.

It is preferred that phenethyl alcohol or antiseptic or antifungal agents such as 1,2-benzisothiazoline-3-one, n-butyl p-hydroxybenzoate, phenol, 4-chloro-3,5-dimethylphenol, 2-phenoxyethanol or 2-(4-thiazolyl)-

benzimidazole described in JP-A-63-257747, JP-A-62-2772248 and JP-A-1-80941 are added to the color light-sensitive materials of the present invention.

The present invention can be applied to various color photographic materials. Typical examples of the color photographic materials to which the present invention can be applied include general-purpose and movie color negative films, reversal color films for slide and TV, color paper, color positive films, reversal color paper, diffusion transfer color light-sensitive material and heat developable light-sensitive material.

Examples of suitable supports which can be used in the present invention are described in the RD No. 17643 (page 28), RD No. 18716 (right column of page 647 to left column of page 648) and RD No. 307105 (page 879).

The sum total of the thicknesses of all of the hydrophilic colloid layers on the emulsion layer side of the light-sensitive material of the present invention is preferably 28 µm or less, more preferably 23 µm or less, still more preferably 18 µm or less, particularly preferably 16 µm or less. The layer swelling rate $T_{\frac{1}{2}}$ is preferably 30 seconds or less, more preferably 20 seconds or less. The layer thickness refers to the layer thickness obtained at 25°C and 55% RH for 2 days. The layer swelling rate $T_{\frac{1}{2}}$ can be measured by conventional method in the art, for example, by using a swellometer of a type described in A. Green, Photographic Science and Engineering, Vol. 19, No. 2, pp. 124-129. $T_{\frac{1}{2}}$ is defined as the time until the degree of swelling reaches 1/2 of the saturated layer thickness when 90% of the maximum swollen layer thickness attained by conducting processing in a color developing solution at 30°C for 3.25 minutes is referred to as the saturated layer thickness.

The layer swelling rate $T_{\frac{1}{2}}$ can be controlled by using a hardening agent to gelatin used as a binder or by changing conditions with time after coating. Further, the swelling ratio of the layer is preferably 150 to 400%. The swelling ratio can be calculated from the maximum layer swollen thickness under the above conditions by using the following formula.

Swelling ratio (%) = (maximum swollen layer thickness - layer thickness)/layer thickness

It is preferred that at least one hydrophilic colloid layer (called back layer) having a thickness of 2 to 20 µm in total is provided on the opposite side of the light-sensitive material of the present invention to the emulsion layer side thereof. It is also preferred that the back layer contains the above described light absorber, filter dye, ultraviolet light absorber, antistatic agent, hardening agent, binder, plasticizer, lubricant, coating aid, surfactant, etc. The swelling ratio of the back layer is preferably 150 to 500%.

The color photographic materials of the present invention can be processed by conventional methods described in RD No. 17643 (page 28 to 29), RD No. 18716 (left column to right column of page 651) and RD No. 307105 (page 880 to 881).

The color developing solutions used in the present invention are aqueous alkaline solutions containing preferably aromatic primary amine color developing agents as main components. The above described color developing agents are preferred.

Of them, 3-methyl-4-amino-N-ethyl-N-β-hydroxyethylanilinesulfate is particularly preferred. These compounds may be used as combination of two or more of them as desired.

When reversal development is carried out, black-and-white development is first carried out and color development is then carried out. Black-and-white developing solutions contain one or more of conventional black-and-white developing agents such as dihydroxybenzenes (e.g., hydroquinone), 3-pyrazolidones (e.g., 1-phenyl-3-pyrazolidone) and aminophenols (e.g., N-methyl-p-aminophenol).

The pH of the color developing solutions and the black-and-white developing solutions is generally in the range of 9 to 12. The replenishment rate of these developing solutions varies depending on the types of color photographic materials, but is usually 3 ℓ or less per $m^2$ of the photographic material. The replenishment rate can be reduced to 500 ml or less when the concentration of bromide ion in the replenisher is reduced. When the replenishment is to be reduced, it is desirable for the contact area of the processing solution with air in the bath to be reduced to prevent the solution from being evaporated or oxidized by air.

The contact area of the photographic processing solution with air in the processing tank can be represented by an opening ratio defined below.

Opening Ratio = [contact area ($cm^2$) of processing solution with air] ÷ [capacity ($cm^3$) of processing solution]

It is preferred for the opening ratio to be 0.1 or less, more preferably 0.001 to 0.05. Examples of methods for reducing the opening ratio include a method wherein a cover such as a floating cover is

provided on the surface of the photographic processing solution in the processing bath; a method using a movable cover as described in JP-A-1-82033; and a slit processing method described in JP-A-63-216050. It is preferred that the reduction in the opening ratio is applied to not only the color development stage and the black-and-white development stage but also to all subsequent stages such as the bleaching stage, the bleaching-fixing stage, the fixing stage, the washing stage and the stabilization stage. The replenishment rate can be reduced by using a means for inhibiting the accumulation of bromide ion in the developing solution.

The time of the color development stage is usually 2 to 5 minutes. However, the processing time can be shortened by conducting processing at higher temperature and higher pH conditions and increasing the concentration of the color developing agent.

After color development, the photographic emulsion layer is generally bleached. Bleaching may be carried out simultaneously with fixing (bleaching-fixing treatment) or these steps may be separately carried out. After bleaching, a bleaching-fixing treatment may be conducted to expedite processing. Bleaching and fixing may be carried out by using a bleaching-fixing bath comprising two consecutive baths. Fixing may be conducted before the bleaching-fixing treatment. After the bleaching-fixing treatment, bleaching may be conducted according to the purpose. Examples of bleaching agents include compounds of polyvalent metals such as iron(III), peracids, quinones and nitro compounds. Typical examples of bleaching agents include; organic complex salts of iron(III) such as complex salts of aminopolycarboxylic acids (e.g., ethylenediaminetetraacetic acid, diethylenetriaminepentaacetic acid, cyclohexanediaminetetraacetic acid, methyliminodiacetic acid, 1,3-diaminopropanetetraacetic acid, glycol ether diaminetetraacetic acid, etc.), citric acid, tartaric acid, malic acid, etc. Of them, iron(III) complex salts of aminopolycarboxylic acids such as (ethylenediaminetetraacetato)iron(III) complex and (1,3-diaminopropanetetraacetato)iron(III) are preferred from the viewpoints of rapid processing and prevention of environmental pollution. Further, iron(III) complex salts of aminopolycarboxylic acids are useful for bleaching solutions and bleaching-fixing solutions. The pH of the bleaching solutions containing the iron(III) complex salts of the aminopolycarboxylic acids and the bleaching-fixing solutions containing the iron(III) complex salts is generally in the range of 4.0 to 8. Lower pH may be used to expedite processing.

If desired, the bleaching solution, the bleaching-fixing solution and the prebath thereof may contain bleaching accelerators. Examples of suitable bleaching accelerators include compounds having a mercapto group or a disulfide group described in U.S. Patent 3,893,858, West German Patents 1,290,812 and 2,059,988, JP-A-53-32736, JP-A-53-57831, JP-A-53-37418, JP-A-53-72623, JP-A-52-95630, JP-A-53-95631, JP-A-53-104232, JP-A-53-124424, JP-A-53-141623, JP-A-53-28426 and Research Disclosure No. 17129 (July 1978); thiazolidine derivatives described in JP-A-50-140129; thiourea derivatives described in JP-B-45-8506, JP-A-52-20832, JP-A-53-32735 and U.S. Patent 3,706,561; iodides described in West German Patent 1,127,715 and JP-A-58-16235; polyoxyethylene compounds described in West German Patents 996,410 and 2,748,430; polyamine compounds described in JP-B-45-8836; compounds described in JP-A-49-40943, JP-A-49-59644, JP-A-53-94927, JP-A-54-35727, JP-A-55-26506 and JP-A-58-163940; and bromide ions. Of them, the compounds having a mercapto group or a disulfide group are preferred from the standpoint of high accelerating effect. Particularly, the compounds described in U.S. Patent 3,893,858, West German Patent 1,290,812 and JP-A-53-95630 are preferred. Further, the compounds described in U.S. Patent 4,552,834 are preferred. These bleaching accelerators may be present in the photographic materials. These bleaching accelerators are particularly effective in conducting bleaching-fixing of the color photographic materials for photographing.

In addition to the above-described compounds, the bleaching solution and the bleaching-fixing solution preferably contain organic acids to prevent bleach stain. Particularly preferred organic acids are compounds having an acid dissociation constant (pKa) of 2 to 5. Specific examples of compounds which can be advantageously used include acetic acid, propionic acid and hydroxyacetic acid.

Examples of fixing agents which can be used in the fixing solution and in the bleaching-fixing solution include thiosulfates, thiocyanates, thioether compounds, thioureas and iodides. Thiosulfates are generally used. Particularly, ammonium thiosulfate is most widely used. Further, it is preferred that thiosulfates are used together with thiocyanates, thioether compounds or thioureas. Sulfites, bisulfites, carbonyl bisulfites adducts and sulfinic acid compounds described in European Patent 294769A are preferred as preservatives in the bleaching solution and the bleaching-fixing solution. Further, it is preferred that aminopolycarboxylic acids or organic phosphonic acids are added to the fixing solution and the bleaching-fixing solution for the purpose of stabilization of the solution.

It is preferred that a compound having a pKa of 6.0 to 9.0, such as imidazole compound (e.g., imidazole, 1-methylimidazole, 1-ethylimidazole, 2-methylimidazole) in an amount of 0.1 to 10 mol/ℓ is present in the fixing solution or the bleaching-fixing solution to adjust the pH.

It is preferred for the total time of the desilverization stage to be as short as possible, as long as a failure in desilverization does not occur. The desilverization time is preferably 1 to 3 minutes, more preferably 1 to 2 minutes. The processing temperature is 25 to 50 °C, preferably 35 to 45 °C. When processing is carried out in the preferred temperature range, the desilverization rate is improved and stain can be effectively prevented from being formed after processing.

It is preferred that stirring in the desilverization stage is conducted as intensely as possible. Examples of methods for conducting stirring intensely include a method where a stream of the processing solution is jetted against the emulsion layer surface of the light-sensitive material as described in JP-A-62-183460; a method where a stirring effect is improved by using a rotary means described in JP-A-62-183461; a method where the emulsion layer surface is brought into contact with a wiper blade provided in the processing solution and the light-sensitive material is transferred to form a turbulent flow on the surface of the emulsion layer, thus improving the stirring effect; and a method where the circulating flow rate of all of the processing solution is increased. These means for improving the stirring effect are effective in stirring any of the bleaching solution, the bleaching-fixing solution and the fixing solution. It is believed that an improvement in stirring accelerates the feed of the bleaching agent and fixing agent into the emulsion layers and as a result, the desilverization speed can be increased. Further, the above stirring improving means is more effective when bleaching accelerators are used. The above described stirring improving means enables the desilverization accelerating effect to be greatly increased and can solve the problem with regard to fixing inhibiting effect due to bleaching accelerators.

It is preferred that automatic processors used in the processing of the light-sensitive materials of the present invention are provided with a light-sensitive material-conveying means as described in JP-A-60-191257, JP-A-60-191258 and JP-A-60-191259. As described in JP-A-60-191257, the conveying means can greatly reduce the amount of the processing solution brought over from the prebath into the subsequent bath and such has an excellent effect in preventing a deterioration in the performance of the processing solution. This effect is particularly effective in shortening the processing time in each stage and in reducing the replenishment rate of the processing solution.

Usually, the silver halide color photographic materials of the present invention are subjected to washing and/or stabilization stage after desilverization. The amount of washing water in the washing stage widely varies depending on the characteristics (e.g., depending on materials used such as couplers) of the photographic materials, use, the temperature of the washing water, the number of washing tanks (the number of stages), replenishing system (countercurrent, concurrent flow) and other conditions. The relationship between the amount of water and the number of washing tanks in the multi-stage countercurrent system can be determined by the method described in Journal of the Society of Motion Picture and Television Engineers, Vol. 64, pp. 248-253 (May 1995). According to the multistage countercurrent system described in the above literature article, the amount of washing water can be greatly reduced. However, a problem occurs because the residence time of water in the tanks is prolonged. As a result, bacteria grow and the resulting suspended matter is deposited on the photographic material. A method for reducing calcium ion and magnesium ion described in JP-A-62-288838 can be effectively used in the processing of the color photographic materials of the present invention to solve the above-described problem. Further, isothiazolone compounds, thiabendazole compounds, chlorine-containing germicides such as sodium chlorinated isocyanurate and benztriazole described in JP-A-57-8542 and germicides described in Chemistry of Germicidal Antifungal Agent (1986), written by Hiroshi Horiguchi, published by Sankyo Shuppan Co., Sterilization, Disinfection, Antifungal Technique (1982), edited by Sanitary Technique Society published by Kogyo Gijutsu Kai, and Antibacterial and Antifunagal Cyclopedie (1986), edited by Japan Antibacterial Antifungal Society, can be used.

The pH of the washing water in the treatment of the photographic materials of the present invention is in the range of 4 to 9, preferably 5 to 9. The temperature of the washing water and the washing time vary depending on the characteristics of the photographic materials, use, etc., but the temperature and time of the washing are generally 15 to 45 °C for 20 seconds to 10 minutes, preferably 25 to 40 °C for 30 seconds to 5 minutes. The photographic materials of the present invention may be processed directly with stabilizing solutions in place of the washing water. Such a stabilizing treatment can be carried out using conventional methods described in JP-A-57-8543, JP-A-58-14834 and JP-A-60-220345.

A stabilizing treatment subsequent to the washing may be conducted, if desired. The stabilizing treatment may be used as the final bath for the color photographic materials for photographing. An example thereof includes a stabilizing bath containing a dye stabilizer and a surfactant. Examples of suitable dye stabilizers include aldehydes such as formaldehyde and glutaraldehyde, N-methylol compounds, hexamethylenetetramine and aldehyde sulfite adducts. The stabilizing bath may contain various chelating agents and antifungal agents as desired.

Overflow solution from the replenishment of washing water and/or stabilizing can be reused in other stages such as a desilverization stage.

When processing solutions are concentrated by evaporation in the processing by automatic processors, it is preferred that the concentrations of the processing solutions be corrected by adding water.

The color developing agents may be incorporated in the silver halide color photographic materials of the present invention for the purpose of simplifying and expediting processing. It is preferred for precursors of the color developing agents to be used for the incorporation thereof in photographic materials. Examples of suitable precursors include indoaniline compounds described in U.S. Patent 3,342,597; Schiff base compounds described in U.S. Patent 3,342,599, Research Disclosure No. 14850 and ibid., No. 15159; aldol compounds described in Research Disclosure No. 13924; metal complex salts described in U.S. Patent 3,719,492; and urethane compounds described in JP-A-53-135628.

If desired, 1-phenyl-3-pyrazolidones may be incorporated in the silver halide color photographic materials of the present invention for the purpose of accelerating color development. Typical examples of these compounds include those described in JP-A-56-64339, JP-A-57-144547 and JP-A-58-115438.

In the present invention, various processing solutions are used at a temperature of 10 to 50°C. Generally, a temperature of 33 to 38°C is used. However, it is possible to use a higher temperature to accelerate processing and to shorten the processing time, while a lower temperature can be used to improve image quality and to improve the stability of the processing solutions.

The silver halide light-sensitive materials of the present invention can be applied to heat developable light-sensitive materials described in U.S. Patent 4,500,626, JP-A-60-133449, JP-A-59-218443, JP-A-61-238056 and European Patent 210660A2.

The present invention is now illustrated in greater detail by reference to the following examples which, however, are not to be construed as limiting the invention in any way.

## EXAMPLE 1

The following layers with the following compositions were coated on an undercoated cellulose triacetate film support to prepare a multi-layer color light-sensitive material as Sample 101.

### Composition of Light-Sensitive Layer

The following abbreviations for the principal materials used in the layers are employed for brevity's sake.

ExC : cyan coupler
ExM : magenta coupler
ExY : yellow coupler
ExS : sensitizing dye
UV : ultraviolet light absorber
HBS : high-boiling organic solvent
H : hardening agent for gelatin

The numerals given represent coating weight (g/m$^2$). The amounts of silver halide emulsions are represented as a coating weight in terms of silver. The amounts of sensitizing dyes are represented as moles per mole of silver halide in the same layer.

### Sample 101

| First Layer (antihalation layer) | |
|---|---|
| Black colloidal silver (in terms of silver) | 0.18 |
| Gelatin | 1.40 |
| ExM-1 | 0.18 |
| ExF-1 | $2.0\times10^{-3}$ |

| Second Layer (interlayer) | |
|---|---|
| Emulsion G (in terms of silver) | 0.07 |
| 2,5-Di-t-pentadecylhydroquinone | 0.18 |
| ExC-2 | 0.020 |
| UV-1 | 0.060 |
| UV-2 | 0.080 |
| UV-3 | 0.10 |
| HBS-1 | 0.10 |
| HBS-2 | 0.020 |
| Gelatin | 1.04 |

| Third Layer (low-sensitivity red-sensitive emulsion layer) | |
|---|---|
| Emulsion A (in terms of silver) | 0.25 |
| Emulsion B (in terms of silver) | 0.25 |
| ExS-1 | $6.9 \times 10^{-5}$ |
| ExS-2 | $1.8 \times 10^{-5}$ |
| ExS-3 | $3.1 \times 10^{-4}$ |
| ExC-1 | 0.17 |
| ExC-4 | 0.17 |
| ExC-7 | 0.020 |
| UV-1 | 0.070 |
| UV-2 | 0.050 |
| UV-3 | 0.070 |
| HBS-1 | 0.060 |
| Gelatin | 0.87 |

| Fourth Layer (intermediate-sensitivity red-sensitive emulsion layer) | |
|---|---|
| Emulsion D (in terms of silver) | 0.90 |
| ExS-1 | $3.4 \times 10^{-4}$ |
| ExS-2 | $1.6 \times 10^{-5}$ |
| ExS-3 | $4.9 \times 10^{-4}$ |
| ExC-1 | 0.20 |
| ExC-2 | 0.050 |
| ExC-4 | 0.20 |
| ExC-5 | 0.050 |
| ExC-7 | 0.015 |
| UV-1 | 0.070 |
| UV-2 | 0.050 |
| UV-3 | 0.070 |
| Gelatin | 1.30 |

| Fifth Layer (high-sensitivity red-sensitive emulsion layer) | |
|---|---|
| Emulsion E (in terms of silver) | 1.30 |
| ExS-1 | $2.5\times10^{-4}$ |
| ExS-2 | $1.1\times10^{-4}$ |
| ExS-3 | $3.5\times10^{-4}$ |
| ExC-1 | 0.097 |
| ExC-2 | 0.010 |
| ExC-3 | 0.065 |
| ExC-6 | 0.020 |
| HBS-1 | 0.22 |
| HBS-2 | 0.10 |
| Gelatin | 1.63 |

| Sixth Layer (interlayer) | |
|---|---|
| Cpd-1 | 0.040 |
| HBS-1 | 0.020 |
| Gelatin | 0.80 |

| Seventh Layer (low-sensitivity green-sensitive emulsion layer) | |
|---|---|
| Emulsion C (in terms of silver) | 0.30 |
| ExS-4 | $2.5\times10^{-5}$ |
| ExS-5 | $1.7\times10^{-4}$ |
| ExS-6 | $6.9\times10^{-4}$ |
| ExM-1 | 0.021 |
| ExM-2 | 0.26 |
| ExM-3 | 0.030 |
| ExY-1 | 0.025 |
| HBS-1 | 0.10 |
| HBS-3 | 0.010 |
| Gelatin | 0.63 |

| Eighth Layer (intermediate-sensitivity green-sensitive emulsion layer) | |
|---|---|
| Emulsion D (in terms of silver) | 0.50 |
| ExS-4 | $2.1\times10^{-5}$ |
| ExS-5 | $1.4\times10^{-4}$ |
| ExS-6 | $5.8\times10^{-4}$ |
| ExM-2 | 0.094 |
| ExM-3 | 0.026 |
| ExY-1 | 0.018 |
| HBS-1 | 0.16 |
| HBS-3 | $8.0\times10^{-3}$ |
| Gelatin | 0.50 |

| Ninth Layer (high-sensitivity green-sensitive emulsion layer) | |
|---|---|
| Emulsion E (in terms of silver) | 1.60 |
| ExS-4 | $4.6 \times 10^{-5}$ |
| ExS-5 | $1.0 \times 10^{-4}$ |
| ExS-6 | $4.1 \times 10^{-4}$ |
| ExC-1 | 0.015 |
| ExM-1 | 0.013 |
| ExM-4 | 0.065 |
| ExM-5 | 0.019 |
| HBS-1 | 0.25 |
| HBS-2 | 0.10 |
| Gelatin | 1.54 |

| Tenth Layer (yellow filter layer) | |
|---|---|
| Yellow colloidal silver (in terms of silver) | 0.07 |
| Cpd-1 | 0.080 |
| HBS-1 | 0.030 |
| Gelatin | 0.95 |

| Eleventh Layer (low-sensitivity blue-sensitive emulsion layer) | |
|---|---|
| Emulsion C (in terms of silver) | 0.25 |
| ExS-7 | $8.6 \times 10^{-4}$ |
| ExY-1 | 0.042 |
| ExY-2 | 0.72 |
| HBS-1 | 0.28 |
| Gelatin | 1.10 |

| Twelfth Layer (intermediate-sensitivity blue-sensitive emulsion layer) | |
|---|---|
| Emulsion D (in terms of silver) | 0.40 |
| ExS-7 | $7.4 \times 10^{-4}$ |
| ExC-7 | $7.0 \times 10^{-3}$ |
| ExY-2 | 0.15 |
| HBS-1 | 0.050 |
| Gelatin | 0.78 |

| Thirteenth Layer (high-sensitivity blue-sensitive emulsion layer) | |
|---|---|
| Emulsion F (in terms of silver) | 0.70 |
| ExS-7 | $2.8 \times 10^{-4}$ |
| ExY-2 | 0.20 |
| HBS-1 | 0.070 |
| Gelatin | 0.69 |

| Fourteenth Layer (first protective layer) | |
|---|---|
| Emulsion G (in terms of silver) | 0.20 |
| UV-4 | 0.11 |
| UV-5 | 0.17 |
| HBS-1 | $5.0 \times 10^{-2}$ |
| Gelatin | 1.00 |

| Fifteenth Layer (second protective layer) | |
|---|---|
| H-1 | 0.40 |
| B-1 diameter: about 1.7 µm | $5.0 \times 10^{-2}$ |
| B-2 diameter: about 1.7 µm | 0.10 |
| B-3 | 0.10 |
| Z-1 | 0.20 |
| Gelatin | 1.20 |

Further, each layer contained W-1 to W-3, B-4 to B-6, F-1 to F-17, an iron salt, a lead salt, a gold salt, a platinum salt, an iridium salt and a rhodium salt to improve preservability, processability, pressure resistance, antifungal and antibacterial properties, antistatic properties and coatability.

The compounds used in this Example had the following structural formulas.

ExC-1

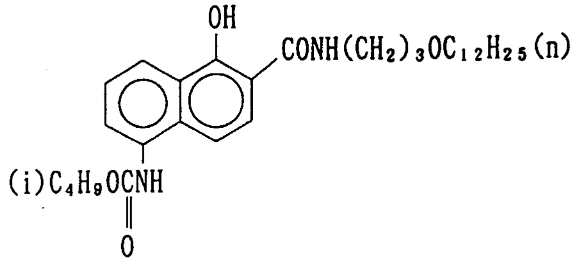

ExC-2

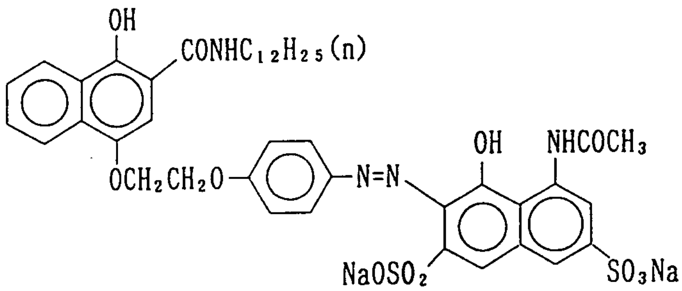

ExC-3

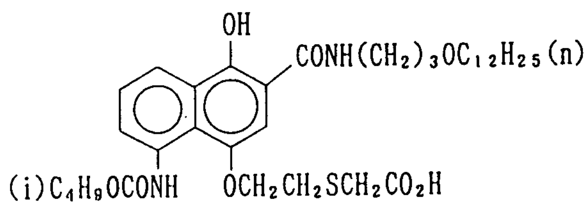

ExC-4

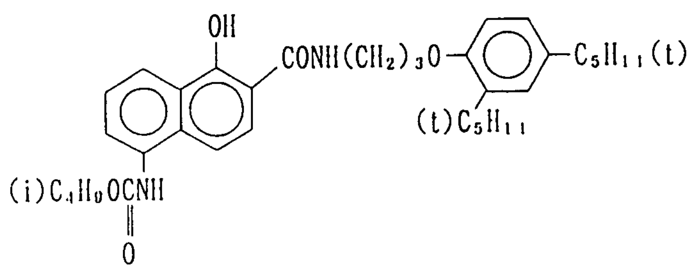

ExC−5

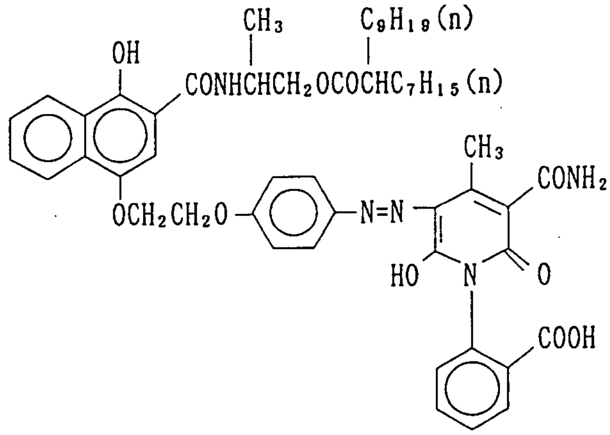

ExC−6

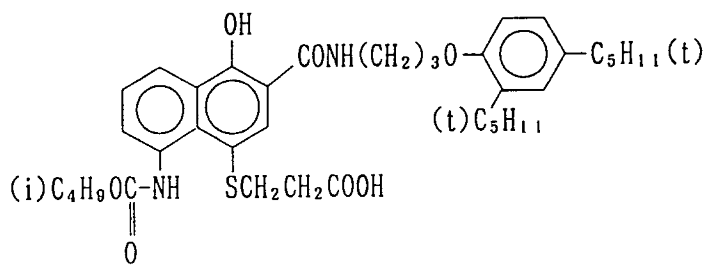

ExC−7

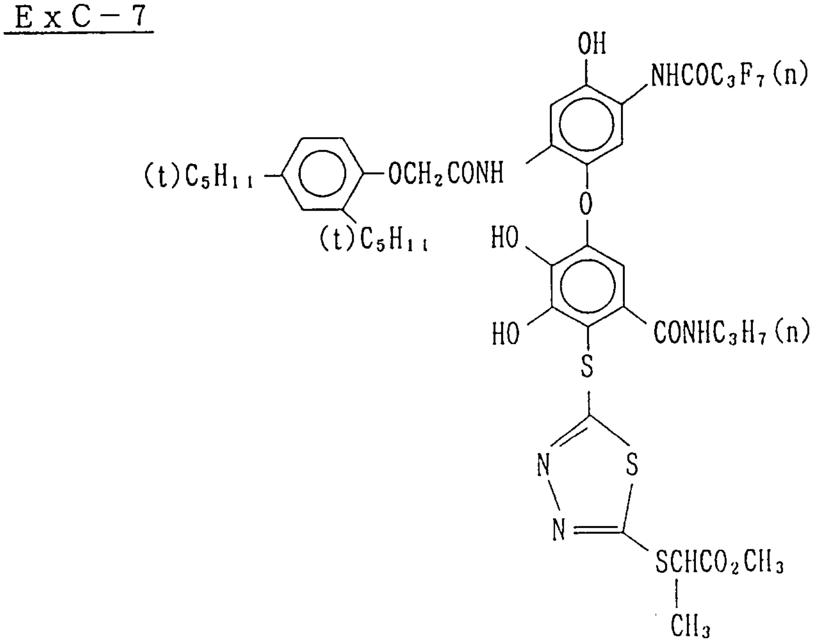

ExM-1

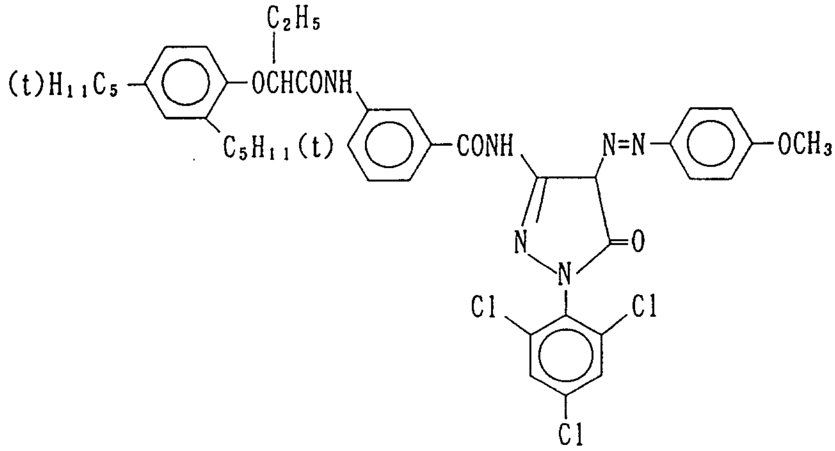

ExM-2

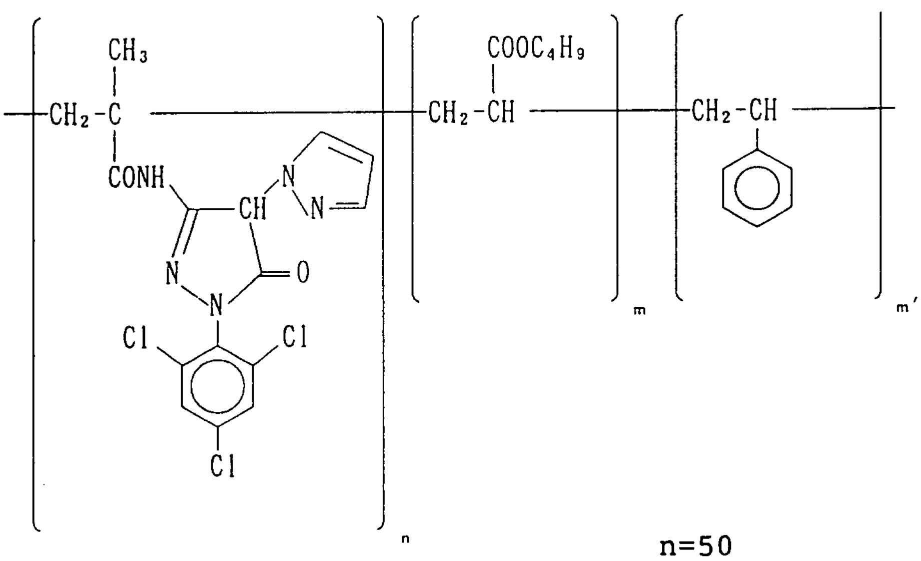

n=50
m=25
m'=25
mol. wt. about 20,000

ExM-3

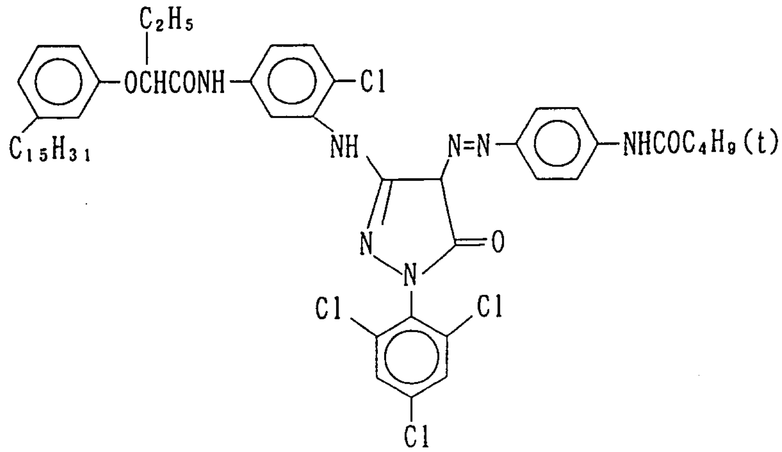

ExM-4

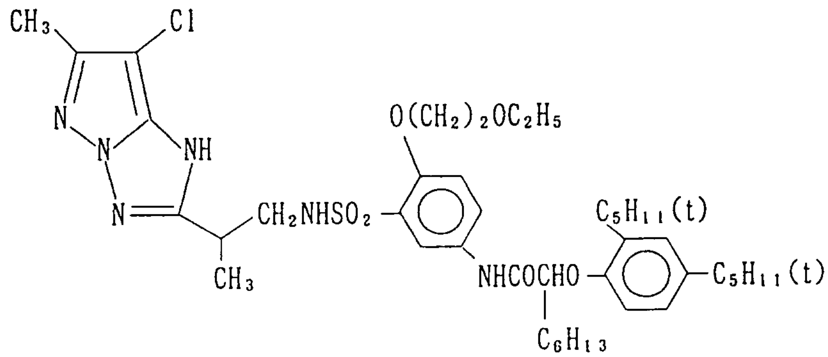

ExM-5

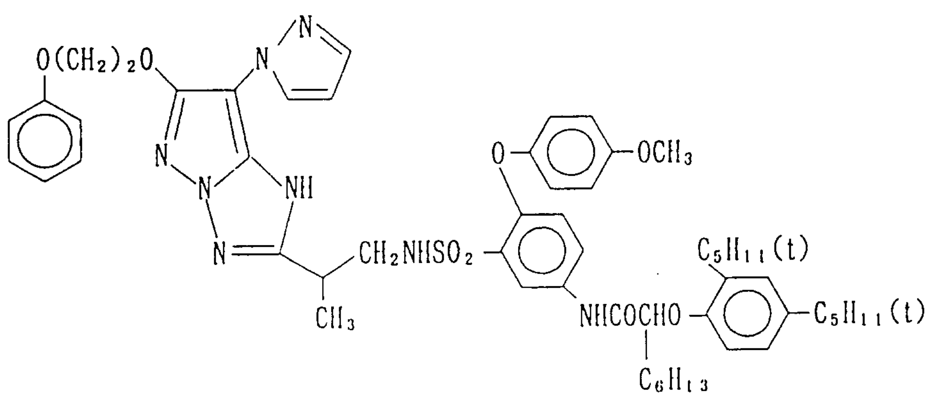

ExY-1

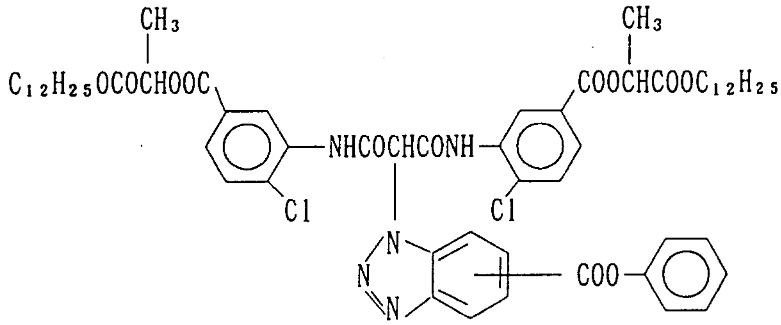

ExY-2

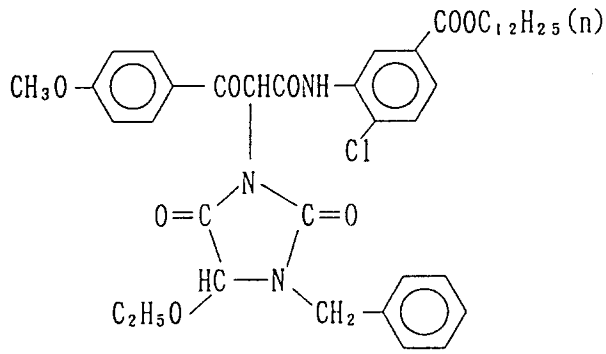

ExF-1

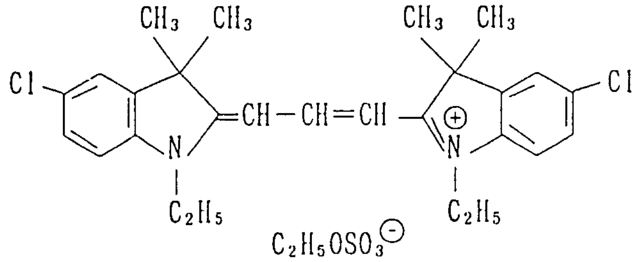

Cpd−1

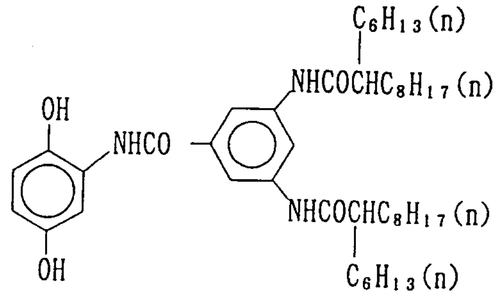

UV−1

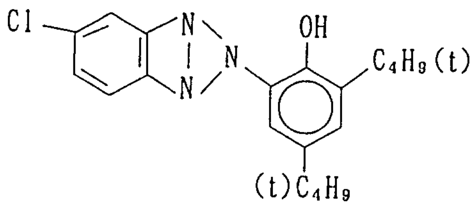

UV−2

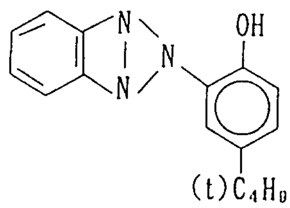

UV−3

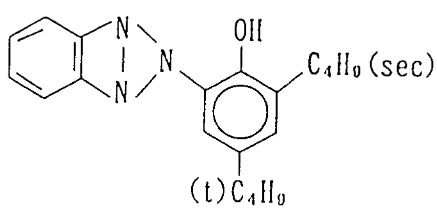

UV－4

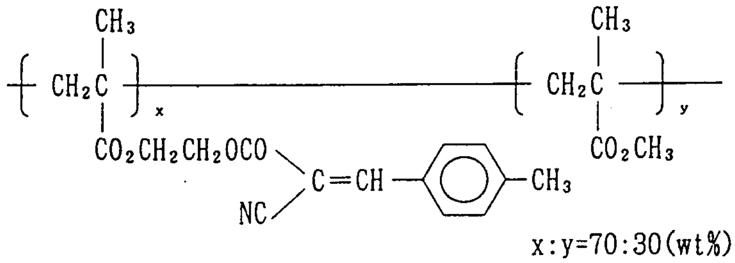

UV－5

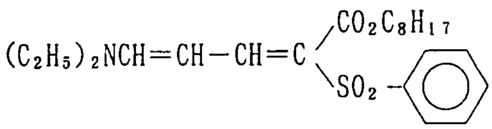

HBS-1 Tricresyl phosphate
HBS-2 Di-n-butyl phthalate

HBS－3

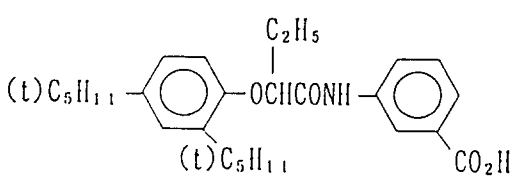

ExS-1

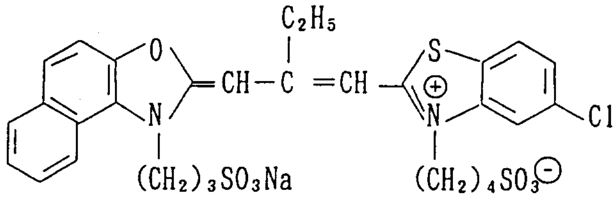

ExS-2

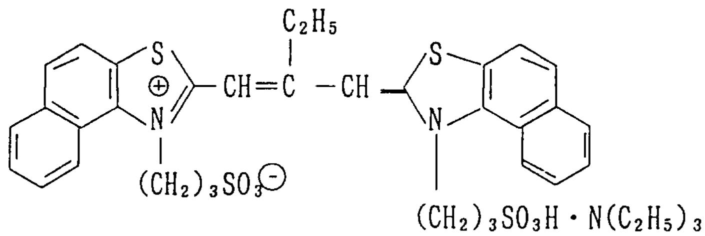

ExS-3

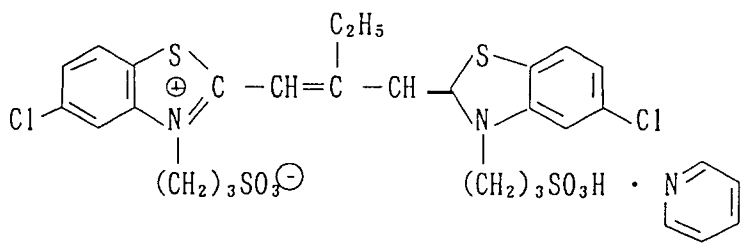

ExS-4

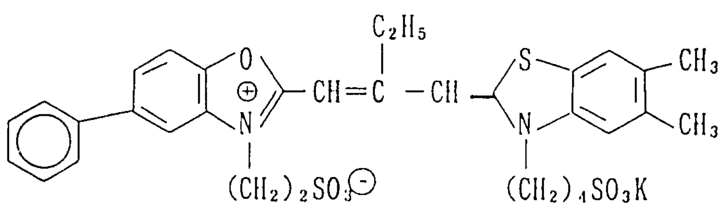

ExS−5

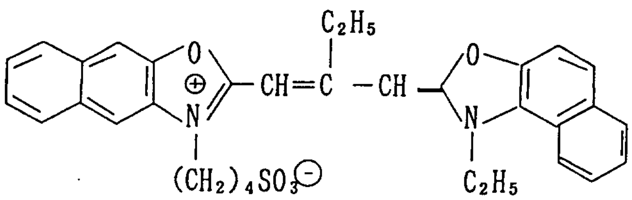

ExS−6

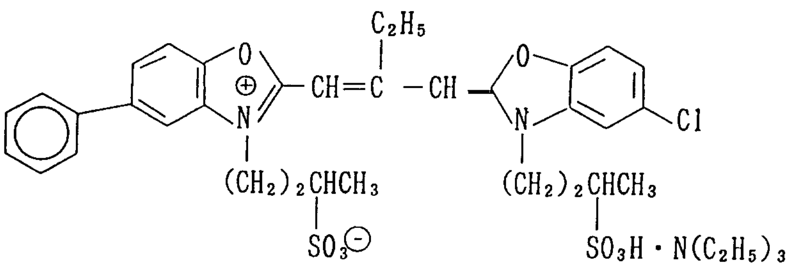

ExS−7

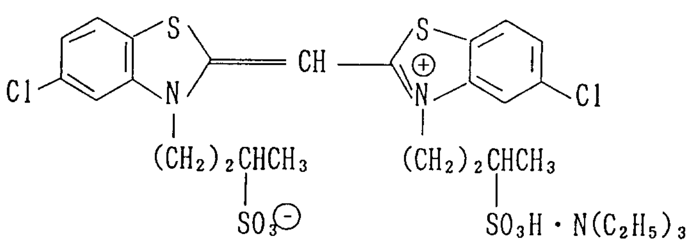

Z−1

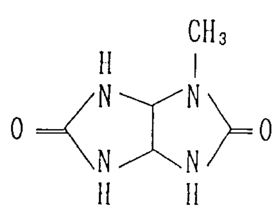

H-1

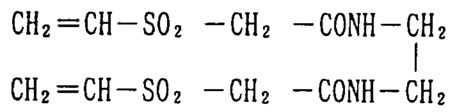

B-1

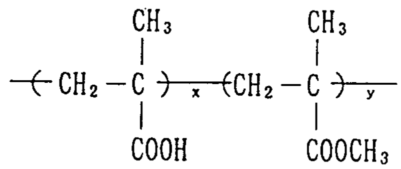

x/y=10/90

B-2

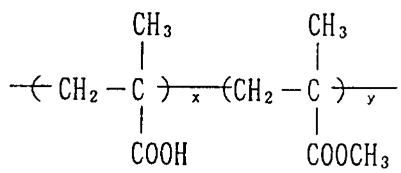

x/y=40/60

B-3

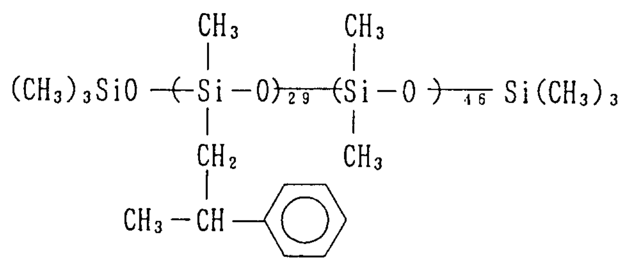

B-4

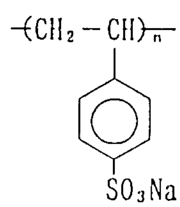

B-5

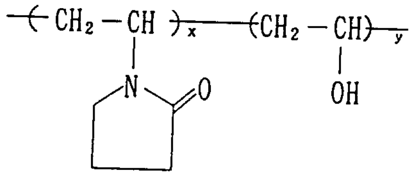

$x/y = 70/30$

B-6

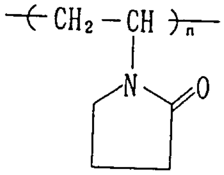

(mol. wt. about 10,000)

W-1

$C_8F_{17}SO_2NHCH_2CH_2CH_2OCH_2CH_2\overset{\oplus}{N}(CH_3)_3$

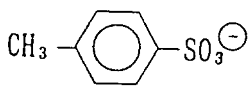

W-2

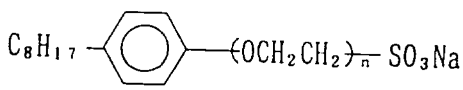

$n = 2 \sim 4$

W-3

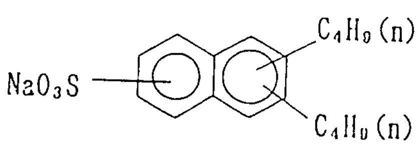

F－1

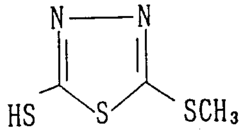

F－2

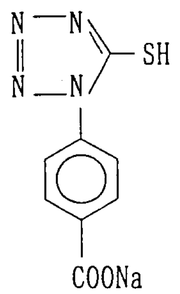

F－3

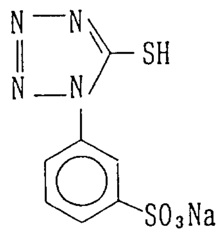

F－4

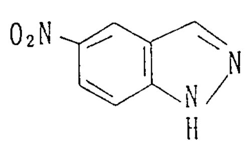

F − 5

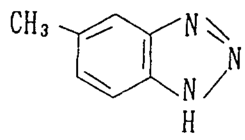

F − 6

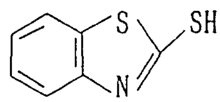

F − 7

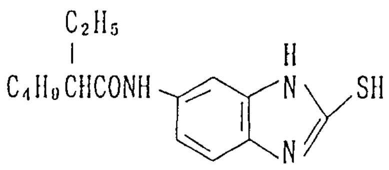

F − 8

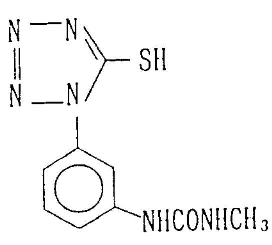

F－9

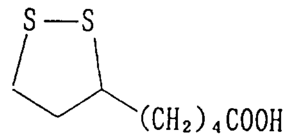

F－10

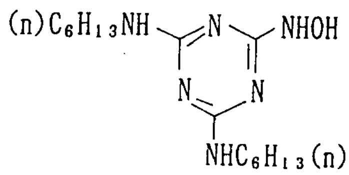

F－11

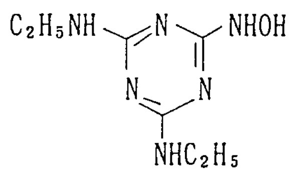

F－12

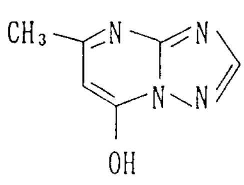

F－１３

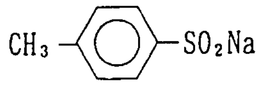

F－１４

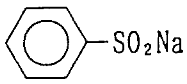

F－１５

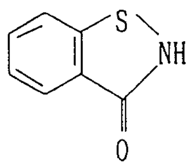

F－１６

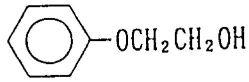

F－１７

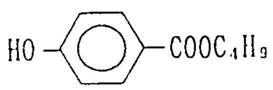

SEN-1

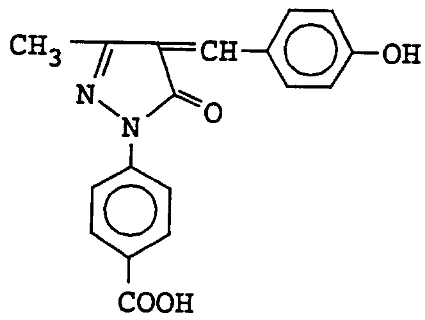

Compound described in JP-A-56-12639

SEN-2

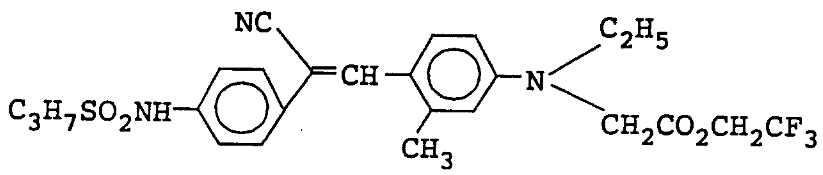

Compound described in U.S. Patent 4,420,555

TABLE 1

| Emulsion | Average AgI Content (%) | Mean Grain Size (μm) | Coefficient of Variation in Grain Size (%) | Ratio of Diameter/ Thickness | Ratio of Amount of Silver [Core/ Intermediate/Shell] (AgI Content) | Grain Structure/Form |
|---|---|---|---|---|---|---|
| A | 4.0 | 0.45 | 25 | 1 | [1/3] (13/1) | Double structural, octahedral grains |
| B | 8.9 | 0.70 | 15 | 1 | [3/7] (25/2) | Double structural, octahedral grains |
| C | 2.0 | 0.60 | 25 | 7 | - | Uniform structural, tabular grains |
| D | 9.0 | 0.70 | 25 | 6 | [12/59/29] (0/11/8) | Triple structural, tabular grains |
| E | 9.0 | 0.90 | 20 | 5.5 | [8/59/33] (0/11/8) | Triple structural, tabular grains |
| F | 14.5 | 1.25 | 23 | 3.5 | [37/63] (34/3) | Double structural, plate grains |
| G | 1.0 | 0.07 | 15 | 1 | - | Uniform structural, fine grains |

In Table 1;

(1) Emulsions A to F were subjected to reduction sensitization during grain preparation by using thiourea dioxide in an amount of $1\times10^{-4}$ mol/mol-Ag and sodium ethane thiosulfonate ($C_2H_5SO_2SNa$) in an amount of $2\times10^{-4}$ mol/mol-Ag in accordance with the Examples in JP-A-2-191938.

(2) Emulsions A to F were subjected to gold sensitization, sulfur sensitization, and selenium sensitization in the presence of the spectral sensitizing dyes described in the individual light-sensitive layers and potassium thiocyanate in accordance with the Examples in EP 443453A.

(3) The preparation of tabular grains was performed by using enzyme-processed low-molecular weight gelatin (average molecular weight: 20,000) in accordance with the Examples in JP-A-1-158426.

(4) Dislocation lines as described in EP 443453A were observed in tabular grains and regular crystal grains having a grain structure when a high-voltage electron microscope was used.

Preparation of Sample 102

Sample 102 was prepared in the same manner as in the preparation of Sample 101 except that comparative dye SEN-1 (coating weight: $3.0\times10^{-4}$ mol/m$^2$) in the form of a fine crystalline solid dispersion was coated in place of yellow colloidal silver used in the Tenth Layer (yellow filter layer) of Sample 101.

Preparation of Samples 103 to 106

Each of Samples 103 to 106 was prepared in the same manner as in the preparation of Sample 101 except that each of comparative dye SEN-2 and dyes D-15, D-16 and D-29 of the present invention (coating weight of each dye: $3.0\times10^{-4}$ mol/m$^2$) in the form of an emulsified dispersion was coated in place of yellow colloidal silver used in the Tenth Layer (yellow filter layer) of Sample 101.

The fine crystalline solid dispersion was prepared in the following manner. One gram of the dye together with water and a surfactant Alkanol XC (alkylnaphthalenesulfonate manufactured by Du Pont) was

placed in a ball mill container. Further, zirconium oxide beads were put into the container, and the container was then closed. The dispersion of the ingredients was carried out in the ball mill for 4 days, and 50 ml of a 10% gelatin solution was added thereto. The beads were removed to obtain the dispersion.

The emulsified dispersion was prepared in the following manner. One gram of the dye and 3 g of tricresyl phosphate were dissolved in 20 ml of ethyl acetate. The resulting solution was mixed with 50 ml of a 10% gelatin solution containing 0.2 g of sodium dodecylbenzenesulfonate. The mixture was emulsified and dispersed using a colloid mill.

Samples 101 to 106 were imagewise exposed to white light and then subjected to the following color development processing. The density of the resulting image was measured. The sensitivity (in terms of relative sensitivity) of the green-sensitive layer obtained from the density of the magenta dye image is shown in Table 2 below. Further, the decolorizability and dissolving-out of the dyes during the development processing are shown by the difference (ΔDmin) between the Dmin of the yellow density (minimum density of the image) of Sample 101 and that of each of Samples 102 to 106.

Samples 101 to 106 were stored under temperature and humidity conditions of 50°C and 80% RH for 3 days. The change in photographic characteristics is shown by the sensitivity (in terms of relative sensitivity) of the blue-sensitive layer obtained from the density of the yellow-dye image. The cut ratio of blue light by a yellow filter after storage at 50°C and 80% RH for 3 days is shown in Table 2 below when the cut ratio of Sample 101 is referred to as 100% and that of Sample 101 wherein yellow colloidal silver is omitted is referred to as 0%.

Processing Method

| Stage | Processing Time | Processing Temp. |
|---|---|---|
| Color Development | 3 min 15 sec | 38°C |
| Bleaching | 3 min 00 sec | 38°C |
| Washing | 30 sec | 24°C |
| Fixing | 3 min 00 sec | 38°C |
| Washing (1) | 30 sec | 24°C |
| Washing (2) | 30 sec | 24°C |
| Stabilization | 30 sec | 38°C |
| Drying | 4 min 20 sec | 55°C |

The processing solutions had the following composition.

Color Developing Solution

| | |
|---|---|
| Diethylenetriaminepentaacetic acid | 1.0 g |
| 1-Hydroxyethylidene-1,1-diphosphonic acid | 3.0 g |
| Sodium sulfite | 4.0 g |
| Potassium carbonate | 30.0 g |
| Potassium bromide | 1.4 g |
| Potassium iodide | 1.5 mg |
| Hydroxylamine sulfate | 2.4 g |
| 4-[N-Ethyl-N-β-hydroxyethylamino]-2-methylaniline sulfate | 4.5 g |
| Water to make | 1.0 liter |
| pH | 10.05 |

Bleaching Solution

| | |
|---|---|
| Sodium ethylenediaminetetraacetato ferrate trihydrate | 100.0 g |
| Disodium ethylenediaminetetraacetate | 10.0 g |
| 3-Mercapto-1,2,4-triazole | 0.08 g |
| Ammonium bromide | 140.0 g |
| Ammonium nitrate | 30.0 g |
| Ammonia water (27% aq. soln.) | 6.5 ml |
| Water to make | 1.0 liter |
| pH | 6.0 |

Fixing Solution

| | |
|---|---|
| Disodium ethylenediaminetetraacetate | 0.5 g |
| Ammonium sulfite | 20.0 g |
| Aqueous solution of ammonium thiosulfate (700 g/ℓ) | 290.0 ml |
| Water to make | 1.0 liter |
| pH | 6.7 |

Stabilizing Solution

| | |
|---|---|
| Sodium p-toluenesulfinate | 0.03 g |
| Polyoxyethylene p-monononylphenyl ether (an average degree of polymerization: 10) | 0.2 g |
| Disodium ethylenediaminetetraacetate | 0.05 g |
| 1,2,4-Triazole | 1.3 g |
| 1,4-Bis(1,2,4-triazole-1-ylmethyl)piperazine | 0.75 g |
| Water to make | 1.0 liter |
| pH | 8.5 |

TABLE 2

| Sample No. | Dye | Relative Sensitivity of Green-Sensitive Layer | Reduction in Sensitivity (in terms of relative sensitivity) of Blue-Sensitive Layer after Storage at 50°C, 80% RH for 3 days | Dmin (difference between Dmin of Sample 101 and Dmin of other samples) | Cut Ratio of Blue Light After Storage at 50°C, 80% RH for 3 days (%) |
|---|---|---|---|---|---|
| 101 (Comp. Ex.) | colloidal silver | 100 | 100 | - | 100 |
| 102 ( " ) | SEN-1 (comparative dye) | 95 | 90 | 0.01 | 70 |
| 103 ( " ) | SEN-2 ( " ) | 110 | 88 | 0.70 | 95 |
| 104 (Invention) | D-15 (Invention) | 112 | 99 | 0.02 | 98 |
| 105 ( " ) | D-16 ( " ) | 115 | 98 | 0.02 | 99 |
| 106 ( " ) | D-29 ( " ) | 113 | 99 | 0.01 | 98 |

It is apparent from the results in Table 2 above that the present invention can provide silver halide light-sensitive materials which have excellent decolorizability and preservability.

The present invention was applied to the Eleventh Layer of the reversal color light-sensitive materials of Examples of JP-A-2-854. Thst is, dye D-16 was used in an amount of $3.0\times10^{-4}$ mol/m$^2$ instead of yellow colloidal silver in the eleventh layer (i.e., yellow filter layer). Reversal color processing was carried out.

Similar results to those described above were obtained.

Further, the present invention was applied to the black-and-white silver halide light-sensitive materials of Example 1 of JP-A-3-109535. That is, dye D-16 was used in an amount of 250 mg/m$^2$ instead of Dye-23. Excellent results were obtained.

Furthermore, the following color development and processing were carried out. Similar results to those described above were obtained.

The following processing stages and processing solution were used.

| Processing Stage | | | | |
|---|---|---|---|---|
| Stage | Processing Time | Processing Temp. (°C) | Replenishment Rate* (ml) | Tank Capacity (ℓ) |
| Color Development | 3 min 5 sec | 38.0 | 600 | 17 |
| Bleaching | 50 sec | 38.0 | 140 | 5 |
| Bleaching-fixing | 50 sec | 38.0 | - | 5 |
| Fixing | 50 sec | 38.0 | 420 | 5 |
| Washing | 30 sec | 38.0 | 980 | 3 |
| Stabilization (1) | 20 sec | 38.0 | - | 3 |
| Stabilization (2) | 20 sec | 38.0 | 560 | 3 |
| Drying | 1 min | 60 | | |

* Replenishment rate being per m$^2$ of light-sensitive material

The flow of the stabilizing solution was a countercurrent system of from (2) to (1). All of the overflow solution of washing water was introduced into the fixing bath. The bleaching-fixing bath was replenished in a manner such that the upper part of each of the bleaching bath and the fixing bath in the automatic processor was provided with a notch, and all of overflow solution produced by feeding replenishers to the bleaching bath and the fixing bath was allowed to flow into the bleaching-fixing bath. The amount of the developing solution brought into the bleaching stage, that of the bleaching solution brought into the bleaching-fixing stage, that of the bleaching-fixing solution brought into the fixing bath and that of the fixing solution brought into the washing stage were 65 ml, 50 ml, 50 ml and 50 ml per m$^2$ of the light-sensitive material, respectively. Cross-over time was 6 seconds for every stage. This time was included within the processing time of the pre-stage.

Replenishers were the same as the tank solutions.

Each processing solution had the following composition.

Color Developing Solution

| | |
|---|---|
| Triethylenetriaminepentaacetic acid | 2.0 g |
| 1-Hydroxyethylidene-1,1-diphosphonic acid | 3.3 g |
| Sodium sulfite | 3.9 g |
| Potassium carbonate | 37.5 g |
| Potassium bromide | 1.4 g |
| Potassium iodide | 1.3 mg |
| Hydroxylamine sulfate | 2.4 g |
| 2-Methyl-4-[N-ethyl-N-($\beta$-hydroxyethyl)amino]aniline sulfate | 4.5 g |
| Water to make | 1.0 liter |
| pH | 10.05 |

Bleaching Solution

| | |
|---|---|
| Ammonium 1,3-diaminopropanetetraacetato ferrate monohydrate | 130 g |
| Ammonium bromide | 80 g |
| Ammonium nitrate | 15 g |
| Hydroxyacetic acid | 50 g |
| Acetic acid | 40 g |
| Water to make | 1.0 liter |
| pH (adjusted with ammonia water) | 4.4 |

Bleaching-Fixing Solution

A 15:85 (by volume) mixture (pH = 7.0) of the above bleaching solution and the following fixing solution.

Fixing Solution

| | |
|---|---|
| Ammonium sulfite | 19 g |
| Aqueous solution of ammonium thiosulfate (700 g/ℓ) | 280 ml |
| Imidazole | 15 g |
| Ethylenediaminetetraacetic acid | 15 g |
| Water to make | 1.0 liter |
| pH (adjusted with ammonia water and acetic acid) | 7.4 |

Washing Water

Tap water was passed through a mixed bed column packed with an H type strongly acidic cation exchange resin (Amberlite IR-120B manufactured by Rohm & Hass Co.) and an OH type strongly basic anion exchange resin (Amberlite IR-400) to reduce the concentration of each of calcium ion and magnesium ion to 3 mg/ℓ or less. Subsequently, sodium dichlorinated isocyanurate (20 mg/ℓ) and sodium sulfate (150 mg/ℓ) were added thereto. The pH of the solution was in the range of 6.5 to 7.5.

Stabilizing Solution

| | |
|---|---|
| Sodium p-toluenesulfinate | 0.03 g |
| Polyoxyethylene p-monononylphenyl ether (an average degree of polymerization: 10) | 0.2 g |
| Disodium ethylenediaminetetraacetate | 0.05 g |
| 1,2,4-Triazole | 1.3 g |
| 1,4-Bis(1,2,4-triazole-1-ylmethyl)piperazine | 0.75 g |
| Water to make | 1.0 liter |
| pH | 8.5 |

It can be seen from the above disclosure that according to the present invention a silver halide photographic material can be obtained which has excellent decolorizability and sensitivity during storage scarcely changes.

While the invention has been described in detail and with reference to specific embodiments thereof, it will be apparent to one skilled in the art that various changes and modifications can be made therein without departing from the spirit and scope thereof.

## Claims

1. A silver halide photographic material comprising a support and having thereon at least one silver halide photographic emulsion layer and containing at least one compound represented by the following formula (I):

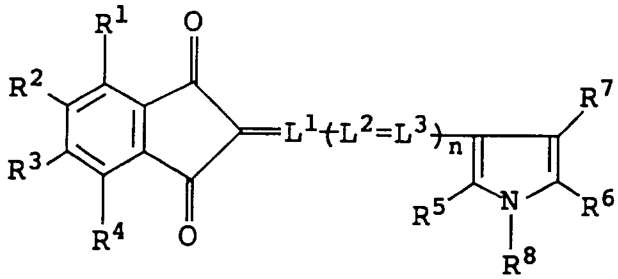

(I)

wherein $R^1$, $R^2$, $R^3$ and $R^4$, which may be the same or different, each represents a hydrogen atom, an alkyl group, an aryl group, $-OR^{10}$, $-COOR^{10}$, $-CONR^{10}R^{11}$, $-CONHCOR^{10}$, $-CONHSO_2R^{10}$, $-NR^{11}COR^{10}$, $-NR^{11}SO_2R^{10}$, $-NR^{10}R^{11}$ or a halogen atom; $R^5$, $R^6$ and $R^7$, which may be the same or different, each represents a hydrogen atom, an alkyl group or an aryl group; $R^8$ represents a hydrogen atom, an alkyl group, an aryl group or an amino group; $L^1$, $L^2$ and $L^3$ each represents a methine group; n represents 0, 1 or 2; $R^{10}$ and $R^{11}$, which may be the same or different, each represents a hydrogen atom, an alkyl group or an aryl group; or $R^1$ and $R^2$, $R^2$ and $R^3$, $R^3$ and $R^4$ or $R^6$ and $R^7$ may combine and form a ring.

2. The silver halide photographic material as in claim 1, wherein said silver halide photographic material contains at least one compound of formula (I) as claimed in claim 1 in the form of a fine solid grain dispersion.

3. The silver halide photographic material as in claim 1, wherein said silver halide photographic material has a hydrophilic colloid layer containing at least one compound of formula (I) as claimed in claim 1 in the form of an oil composition and/or a polymer composition.

4. The silver halide photographic material as in claim 3, wherein said silver halide photographic material is a silver halide color photographic material, and said hydrophilic colloid layer is a yellow filter layer.

5. The silver halide photographic material as in claim 1, wherein in the formula (I), the alkyl group for $R^1$, $R^2$, $R^3$ and $R^4$ is an alkyl group having 1 to 6 carbon atoms; the aryl group for $R^1$, $R^2$, $R^3$ and $R^4$ is an aryl group having 6 to 12 carbon atoms; the alkyl group represented by $R^5$, $R^6$ and $R^7$ is an alkyl group having 1 to 6 carbon atoms; the aryl group represented by $R^5$, $R^6$ and $R^7$ is an aryl group having 6 to 13 carbon atoms; the six-membered ring formed by $R^6$ and $R^7$ is a saturated ring, an unsaturated ring or a heterocyclic ring; the alkyl group represented by $R^8$ is an alkyl group having 1 to 18 carbon atoms; the aryl group represented by $R^8$ is an aryl group having 6 to 22 carbon atoms; the amino group represented by $R^8$ is a dialkylamino group; the alkyl group represented by $R^{10}$ and $R^{11}$ is an alkyl group having 1 to 12 carbon atoms; the aryl group represented by $R^{10}$ and $R^{11}$ is an aryl group having 6 to 12 carbon atoms; the ring formed by $R^1$ and $R^2$, $R^2$ and $R^3$ and $R^3$ and $R^4$ is a saturated ring, an unsaturated ring or a heterocyclic ring; and the methine group represented by $L^1$, $L^2$ and $L^3$ is an unsubstituted or substituted methine group.

6. The silver halide photographic material as in claim 1, wherein said compound of the formula (I) is present in a filter layer or an antihalation layer on the support.

7. The silver halide photographic material as in claim 1, wherein the silver halide emulsion contains silver halide grains with a grain size distribution such that grains having a thickness of 0.5 µm or smaller, a grain size of 0.6 µm or larger and an aspect ratio of 5 or greater comprise at least 50% of the projected area of all of the grains.

European Patent Office

# EUROPEAN SEARCH REPORT

Application Number

EP 93 10 5978

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 430 186 (FUJI)<br>* page 13; example 47 *<br>* page 25, line 16 - line 45 *<br>* page 26, line 39 - line 42 *<br>----- | 1-7 | G03C1/83 |
| | | | TECHNICAL FIELDS SEARCHED (Int. Cl.5 ) |
| | | | G03C |

The present search report has been drawn up for all claims

| Place of search | Date of completion of the search | Examiner |
|---|---|---|
| THE HAGUE | 02 JUNE 1993 | MAGRIZOS S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)